(19) Europäisches Patentamt
European Patent Office
Office européen des brevets

(11) **EP 3 361 123 A1**

(12) **EUROPEAN PATENT APPLICATION**
published in accordance with Art. 153(4) EPC

(43) Date of publication:
**15.08.2018 Bulletin 2018/33**

(51) Int Cl.:
***F16H 3/093*** (2006.01)

(21) Application number: **16853657.1**

(86) International application number:
**PCT/JP2016/079692**

(22) Date of filing: **05.10.2016**

(87) International publication number:
**WO 2017/061503 (13.04.2017 Gazette 2017/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.10.2015 JP 2015198011**
**05.10.2015 JP 2015198012**

(71) Applicant: **Aisin AI Co., Ltd.**
**Nishio-shi, Aichi 445-0006 (JP)**

(72) Inventor: **MASUI, Yuki**
**Nishio-shi**
**Aichi 445-0006 (JP)**

(74) Representative: **TBK**
**Bavariaring 4-6**
**80336 München (DE)**

(54) **MANUAL TRANSMISSION FOR VEHICLE**

(57) The present invention is provided with: a plurality of driving gears provided to an input shaft; driven gears which are provided to a first intermediate shaft, a second intermediate shaft, and a third intermediate shaft and which are always engaged with the driving gears; and a gear switching system that uses one of the driven gears and the driving gears as idler gears provided so as to be able to rotate idly with respect to the shafts to which said gears are provided, that uses the other of the driven gears and the driving gears as fixed gears that are fixed on the shafts to which said gears are provided, and that disengageably fixes an idler gear corresponding to one gear selected among a plurality of gears on the shaft to which the idler gear is provided.

FIG. 1

**Description**

TECHNICAL FIELD

This invention relates to a manual transmission for a vehicle.

BACKGROUND OF THE TECHNOLOGY

Conventionally, a manual transmission (hereinafter, referred to as "M/T") for a vehicle provided with a plurality of speed change stages has been known for example, in Patent Literature 1. The M/T includes an input shaft which forms a power transmitting system with the output shaft of the engine therebetween, an output shaft which forms another power transmitting system with the drive wheel therebetween and two intermediate shafts (first intermediate shaft and a second intermediate shaft), each mutually being arranged in parallel with each other and rotatably supported at a housing.

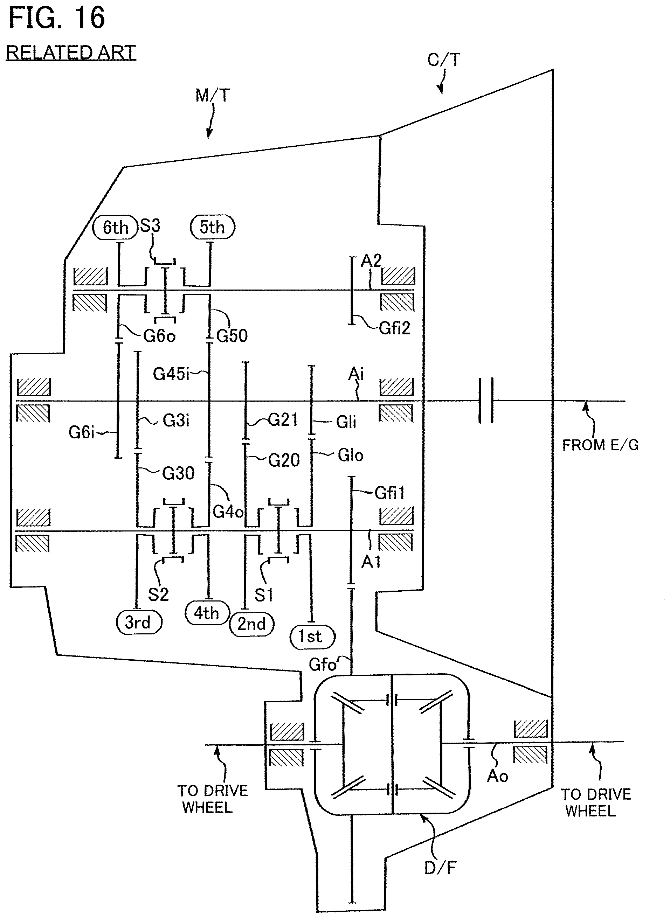

Fig. 16 shows an example of one type of M/T (six-speed M/T) having six forward speed change stages (first to sixth speed). According to the six speed M/T shown in Fig. 16 has an input shaft Ai on which a first speed drive gear G1 i, a second speed drive gear G2i, a first common drive gear G45i which is used commonly for a fourth speed drive gear and a fifth speed drive gear, a third speed drive gear G3i and a sixth speed drive gear G6i are arranged in order from a side close to the engine E/G, being restricted from a relative rotation with the input shaft Ai.

A first final drive gear Gfi1 is arranged on the first intermediate shaft A1, being restricted from a relative rotation therewith. A first speed driven gear G1o which is arranged always being in gear-engagement with the first speed drive gear G1i, a second speed driven gear G2o being in gear-engagement with the second speed drive gear G2i, a fourth speed driven gear G4o being in gear-engagement with the first common drive gear G45i and a third speed driven gear G3o being in gear-engagement with the third speed drive gear G3i are relatively rotatably arranged on the first intermediate shaft A1. These gears Gfi1, G1o, G2o, G4o and G3o are arranged on the first intermediate shaft A1 in this order from a side close to the engine E/G.

A second final drive gear Gfi2 is arranged on the second intermediate shaft A2, being restricted from a relative rotation therewith. A fifth speed driven gear G5o which is arranged always being in gear-engagement with the first common drive gear G45i and a sixth speed driven gear G6o being in gear-engagement with the sixth speed drive gear G6i are relatively rotatably arranged on the second intermediate shaft A2. These gears Gfi2, G5o and G6o are arranged on the second intermediate shaft A2 in this order from a side close to the engine E/G.

A final driven gear Gfo is arranged on the output shaft Ao, always being in gear-engagement with the first final gear Gfi1 and the second final gear Gfi2 and being restricted from a relative rotation with the output shaft Ao.

According to the six-speed M/T shown in Fig. 16, a first speed (second speed) power transmitting system is established by the engagement of the sleeve S1 arranged on the first intermediate shaft A1, allowing an axial movement therewith, but restricting a relative rotation therewith, with the first speed driven gear G1o (second speed driven gear G2o). The power is transmitted from the input shaft Ai to the output shaft Ao via the first speed drive gear G1i (second speed drive gear G2i), the first speed driven gear G1o (second speed driven gear G2o), the sleeve S1, the first intermediate shaft A1, the first final drive gear Gfi1 and the final driven gear Gfo according to this first speed (second speed) power transmitting system.

A third speed (fourth speed) power transmitting system is established by the engagement of the sleeve S2 arranged on the first intermediate shaft A1, allowing an axial movement therewith, but restricting a relative rotation therewith, with the third speed driven gear G3o (fourth speed driven gear G4o). The power is transmitted from the input shaft Ai to the output shaft Ao via the third speed drive gear G3i (the first common drive gear G45i), the third speed driven gear G3o (the fourth speed driven gear G4o), the sleeve S2, the first intermediate shaft A1, the first final drive gear Gfi1 and the final driven gear Gfo according to this third speed (fourth speed) power transmitting system.

A fifth speed (sixth speed) power transmitting system is established by the engagement of the sleeve S3 arranged on the second intermediate shaft A2, allowing an axial movement therewith, but restricting a relative rotation therewith, with the fifth speed driven gear G5o (sixth speed driven gear G6o). The power is transmitted from the input shaft Ai to the output shaft Ao via the first common drive gear G45i (the sixth speed drive gear G6i), the fifth speed driven gear G5o (the sixth speed driven gear G6o), the sleeve S3, the second intermediate shaft A2, the second final drive gear Gfi2 and the final driven gear Gfo according to this fifth speed (sixth speed) power transmitting system.

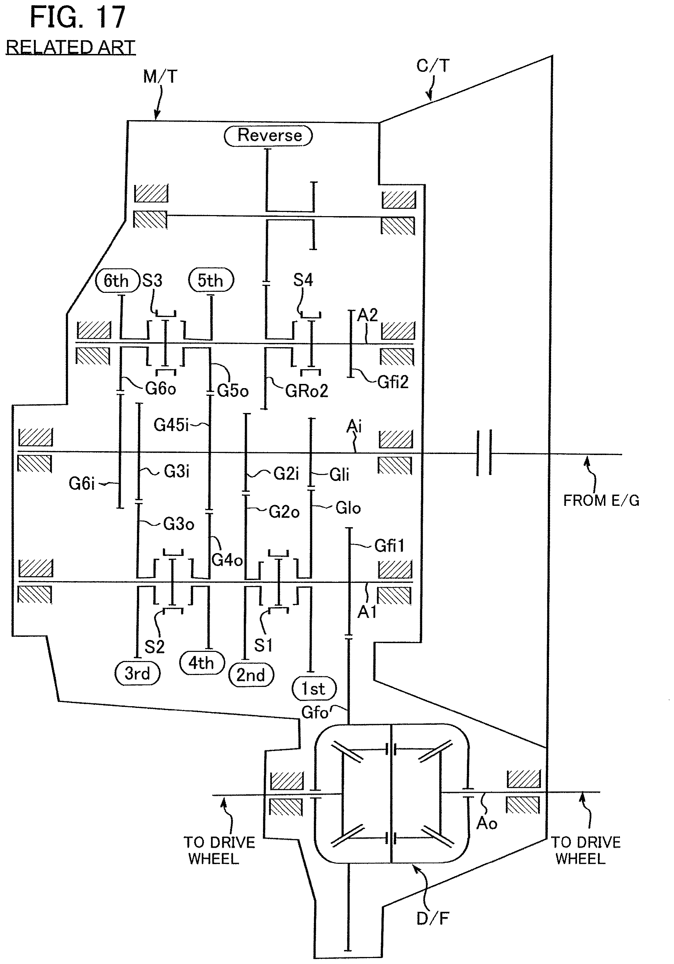

As a different conventional art from the disclosure in Fig. 16, Fig. 17 shows an example of another M/T (six-speed M/T) which has six speed change stages formed by six forward speed change stages (first to sixth speed) and one speed change stage for reverse drive. According to the M/T shown in Fig. 17, the six-speed M/T includes an input shaft Ai on which a first speed drive gear G1i, a second speed drive gear G2i, a first common drive gear G45i which is used commonly for a fourth speed drive gear and a fifth speed drive gear, a third speed drive gear G3i and a sixth speed drive gear G6i are arranged in order from a side close to the engine E/G, being restricted from a relative rotation with the input shaft Ai.

A first final drive gear Gfi1 is arranged on the first intermediate shaft A1, being restricted from a relative rotation therewith. A first speed driven gear G1o which is arranged always being in gear-engagement with the first speed drive gear G1i, a second speed driven gear G2o being in gear-engagement with the second speed drive gear G2i, a fourth speed driven gear G4o being in gear-engagement with the first common drive gear G45i and a third speed driven gear G3o being in gear-engagement with the third speed drive gear G3i are relatively rotatably arranged on the first intermediate shaft A1. These gears Gfi1, G1o, G2o, G4o and G3o are arranged on the first intermediate shaft A1 in this order from a side close to the engine E/G.

A second final drive gear Gfi2 is arranged on the second intermediate shaft A2, being restricted from a relative rotation therewith. A reverse speed driven gear GRo2 is relatively rotatably arranged on the second intermediate shaft A2. A fifth speed driven gear G5o which is arranged always being in gear-engagement with the first common drive gear G45i and a sixth speed driven gear G6o being in gear-engagement with the sixth speed drive gear G6i are relatively rotatably arranged on the second intermediate shaft A2. These gears Gfi2, GRo2, G5o and G6o are arranged on the second intermediate shaft A2 in this order from a side close to the engine E/G.

A final driven gear Gfo is arranged on the output shaft Ao, always being in gear-engagement with the first final gear Gfi1 and the second final gear Gfi2 and being restricted from a relative rotation with the output shaft Ao.

A reverse drive first drive gear GRi which is always in gear-engagement with the first speed drive gear G1i and a second drive gear GRo1 which is always in gear-engagement with the reverse drive driven gear GRo2 and at the same time rotated with the reverse drive first drive gear GRi are provided on an idle shaft A5 and are relatively rotatable therewith.

According to the six-speed M/T shown in Fig. 17, a first speed (second) speed power transmitting system is established by the engagement of the sleeve S1 arranged on the first intermediate shaft A1, allowing an axial movement therewith, but restricting a relative rotation therewith, with the first speed driven gear G1o (second speed driven gear G2o). The power is transmitted from the input shaft Ai to the output shaft Ao via the first speed drive gear G1i (second speed drive gear G2i), the first speed driven gear G1o (second speed driven gear G2o), the sleeve S1, the first intermediate shaft A1, the first final drive gear Gfi1 and the final driven gear Gfo according to this first speed (second speed) power transmitting system.

A third speed (fourth speed) power transmitting system is established by the engagement of the sleeve S2 arranged on the first intermediate shaft A1, allowing an axial movement therewith, but restricting a relative rotation therewith, with the third speed driven gear G3o (fourth speed driven gear G4o). The power is transmitted from the input shaft Ai to the output shaft Ao via the third speed drive gear G3i (the first common drive gear G45i), the third speed driven gear G3o (the fourth speed driven gear G4o), the sleeve S2, the first intermediate shaft A1, the first final drive gear Gfi1 and the final driven gear Gfo according to this third speed (fourth speed) power transmitting system.

A fifth speed (sixth speed) power transmitting system is established by the engagement of the sleeve S3 arranged on the second intermediate shaft A2, allowing an axial movement therewith, but restricting a relative rotation therewith, with the fifth speed driven gear G5o (sixth speed driven gear G6o). The power is transmitted from the input shaft Ai to the output shaft Ao via the first common drive gear G45i (the sixth speed drive gear G6i), the fifth speed driven gear G5o (the sixth speed driven gear G6o), the sleeve S3, the second intermediate shaft A2, the second final drive gear Gfi2 and the final driven gear Gfo according to this fifth speed (sixth speed) power transmitting system.

A reverse drive power transmitting system is established by the engagement of the sleeve S4 arranged on the second intermediate shaft A2, allowing an axial movement therewith, but restricting a relative rotation therewith, with the reverse drive driven gear GRo2. The power is transmitted from the input shaft Ai to the output shaft Ao via the first speed drive gear G1i, the reverse drive first drive gear GRi, the second drive gear GRo1, the reverse drive driven gear GRo2, the sleeve S4, the second intermediate shaft A2, the second final drive gear Gfi2 and the final driven gear Gfo according to this reverse drive power transmitting system.

DOCUMENT LIST OF PRIOR ARTS

PATENT DOCUMENT

Patent Document 1: JP2011-43180 A

DISCLOSURE OF INVENTION

PROBLEMS TO BE SOLVED

Generally, according to the front drive vehicle which engine is installed in the front side of the vehicle, the engine output shaft is arranged along in the width direction relative to the vehicle. The input shaft of the M/T is connected to the engine output shaft co-axially thereto via the clutch. Accordingly, the M/T is arranged in the vicinity of the engine via the clutch so that the input shaft of the M/T is arranged along in the width direction of the vehicle. In other words, the engine-clutch-M/T assembly is disposed in the engine compartment of the vehicle between the right and left side frames which space is relatively narrow. It is, therefore, the entire length of the M/T in an axial direction is desired to be shortened.

Further, such side frame is now becoming larger in size considering the improvements in safety in case of vehicle collision or due to the tendency of reducing the size of the vehicle. Further, a so-called hybrid vehicle having an engine and a motor as a power source is now increasing. Because of such tendency of the vehicle, the installing space for the M/T is becoming further narrower and shortening of the entire length of the M/T in axial direction is needed more and more recently.

It is noted here that for the convenience of explanation, a gear which is provided on a shaft with a play and fixed thereto to be engageable with or disengageable from the shaft is defined to be an "idler gear" and a pair of such idler gears which is engageable with one sleeve is defined to be a "gear set".

According to the conventional six-speed M/T shown in Fig. 16 or 17, six forward speed driven gears which correspond to the idler gears defined in this invention are sorted to be arranged on two intermediate shafts. As a result, particularly, two gear sets (i.e., four driven gears) are arranged on the first intermediate shaft A1. The larger the number of driven gears arranged on one intermediate shaft, the longer the entire length of the M/T in an axial direction becomes and this is one factor of the elongation of the M/T in an axial direction. Thus, it is desired that an axially shortened manual transmission for the vehicle will be proposed.

The present invention was made in consideration of the above issues and problems of the related arts and it is an object of the invention to provide a manual transmission for a vehicle having a plurality of speed change stages, being interposed in a power transmitting system which connects the output shaft of the power source of the vehicle with the drive wheel.

MEANS FOR SOLVING THE PROBLEM

The invention associated with the invention to solve the problems is characterized in that the manual transmission for a vehicle having a plurality of speed change stages and interposed in a power transmitting system which connects an output shaft of a power source of the vehicle with a drive wheel includes:

a housing;
an input shaft rotatably supported on the housing and establishing the power transmitting system with the output shaft of the power source;
a plurality of drive gears provided on the input shaft;
a first intermediate shaft rotatably supported on the housing at a position non-coaxially apart from the input shaft and being in parallel with the input shaft;
at least one driven gear provided on the first intermediate shaft for establishing a speed change stage of a first group which forms a part of the plurality of speed change stages, the at least one driven gear being always engaging with at least one drive gear for establishing the speed change stage of the first group;
a first connecting gear provided on the first intermediate shaft and being relatively rotatable therewith;
a first final drive gear fixed on the first intermediate shaft;
a second intermediate shaft rotatably supported on the housing at a position non-coaxially apart from the input shaft and being in parallel with the input shaft;
at least one driven gear provided on the second intermediate shaft for establishing a speed change stage of a second group which forms a part of a remaining plurality of speed change stages other than the speed change stage of the first group the at least one driven gear being always engaging with at least one drive gear for establishing the speed change stage of the second group;
a second connecting gear provided on the second intermediate shaft and being always engaging with the first connecting gear;
a second final drive gear fixed to the second intermediate shaft;
a third intermediate shaft rotatably supported on the housing at a position non-coaxially apart from the input shaft and being in parallel with the input shaft;
at least one driven gear provided on the third intermediate shaft for establishing a speed change stage of a third group which forms all of the part of the remaining plurality of speed change stages other than the speed change stage of the first group and the speed change stage of the second group, the at least one driven gear being always engaging with at least one drive gear for establishing the speed change stage of the third group;
a third connecting gear fixed on the third intermediate shaft and being always engaging with the first connecting gear;
an output shaft rotatably supported on the housing at a position non-coaxially apart from the input shaft and being in parallel with the input shaft for establishing the power transmitting system with the drive wheel;

a final driven gear fixed on the output shaft and always engaging with the first final drive gear and the second final drive gear, respectively;

one of always engaging driven gear and drive gear with each other being defined as an idler gear idly rotatably provided on a shaft on which the one of always engaging driven gear and drive gear with each other is provided and the other of the always engaging driven gear and drive gear with each other being defined as a fixed gear fixed on a shaft on which the other of the always engaging driven gear and drive gear with each other is provided; and

a speed change stage shifting device which fixes the idler gear corresponding to a selected one speed change stage selected among the plurality of the speed change stages on the shaft on which the idler gear is provided, to be engageable therewith or disengageable therefrom.

EFFECTS OF THE INVENTION

As explained above, the idler gears are idly rotatably provided on the shaft on which the idler gears are to be fixed to be engageable therewith or disengageable therefrom and without concentrating to the two intermediate shafts, the idler gears are arranged on the three intermediate shafts and further on the input shaft. Accordingly, the axial length of the manual transmission for a vehicle having input shaft, output shaft and a plurality of intermediate shafts can be shortened.

BRIEF EXPLANATION OF ATTACHED DRAWINGS

[Fig. 1] Fig. 1 is a skeleton view indicating the six-speed M/T under neutral according to the first embodiment, showing a main part thereof in cross-section;
[Fig. 2A] Fig. 2A is a skeleton view of the six-speed M/T corresponding to Fig. 1, but showing the first speed thereof;
[Fig. 2B] Fig. 2B is a view indicating a power transmitting system under the first speed of the six-speed M/T in Fig. 2A;
[Fig. 3A] Fig. 3A is a skeleton view of the six-speed M/T corresponding to Fig. 1, but showing the second speed thereof;
[Fig. 3B] Fig. 3B is a view indicating a power transmitting system under the second speed of the six-speed M/T in Fig. 3A;
[Fig. 4A] Fig. 4A is a skeleton view of the six-speed M/T corresponding to Fig. 1, but showing the third speed thereof;
[Fig. 4B] Fig. 4B is a view indicating a power transmitting system under the third speed of the six-speed M/T in Fig. 4A;
[Fig. 5A] Fig. 5A is a skeleton view of the six-speed M/T corresponding to Fig. 1, but showing the fourth speed thereof;
[Fig. 5B] Fig. 5B is a view indicating a power transmitting system under the fourth speed of the six-speed M/T in Fig. 5A;
[Fig. 6A] Fig. 6A is a skeleton view of the six-speed M/T corresponding to Fig. 1, but showing the fifth speed thereof;
[Fig. 6B] Fig. 6B is a view indicating a power transmitting system under the fifth speed of the six-speed M/T in Fig. 6A;
[Fig. 7A] Fig. 7A is a skeleton view of the six-speed M/T corresponding to Fig. 1, but showing the sixth speed thereof;
[Fig. 7B] Fig. 7B is a view indicating a power transmitting system under the sixth speed of the six-speed M/T in Fig. 7A;
[Fig. 8] Fig. 8 is a skeleton view indicating the six-speed M/T under neutral according to the second embodiment, showing a main part thereof in cross-section;
[Fig. 9A] Fig. 9A is a skeleton view of the six-speed M/T corresponding to Fig. 8, but showing the first speed thereof;
[Fig. 9B] Fig. 9B is a view indicating a power transmitting system under the first speed of the six-speed M/T in Fig. 9A;
[Fig. 10A] Fig. 10A is a skeleton view of the six-speed M/T corresponding to Fig. 8, but showing the second speed thereof;
[Fig. 10B] Fig. 10B is a view indicating a power transmitting system under the second speed of the six-speed M/T in Fig. 10A;
[Fig. 11A] Fig. 11A is a skeleton view of the six-speed M/T corresponding to Fig. 8, but showing the third speed thereof;
[Fig. 11B] Fig. 11B is a view indicating a power transmitting system under the third speed of the six-speed M/T in Fig. 11A;
[Fig. 12A] Fig. 12A is a skeleton view of the six-speed M/T corresponding to Fig. 8, but showing the fourth speed thereof;
[Fig. 12B] Fig. 12B is a view indicating a power transmitting system under the fourth speed of the six-speed M/T in Fig. 12A;
[Fig. 13A] Fig. 13A is a skeleton view of the six-speed M/T corresponding to Fig. 8, but showing the fifth speed thereof;
[Fig. 13B] Fig. 13B is a view indicating a power transmitting system under the fifth speed of the six-speed M/T in Fig. 13A;
[Fig. 14A] Fig. 14A is a skeleton view of the six-speed M/T corresponding to Fig. 8, but showing the sixth speed thereof;
[Fig. 14B] Fig. 14B is a view indicating a power transmitting system under the sixth speed of the six-speed M/T in Fig. 14A;

[Fig. 15A] Fig. 15A is a skeleton view of the six-speed M/T corresponding to Fig. 8, but showing the reverse thereof;
[Fig. 15B] Fig. 15B is a view indicating a power transmitting system under the reverse of the six-speed M/T in Fig. 15A;
[Fig. 16] Fig. 16 is a skeleton view of a conventional type six-speed M/T corresponding to Fig. 1; and
[Fig. 17] Fig. 17 is a skeleton view of a conventional type six-speed M/T corresponding to Fig. 8.

THE EMBODIMENTS FOR IMPLEMENTING THE INVENTION

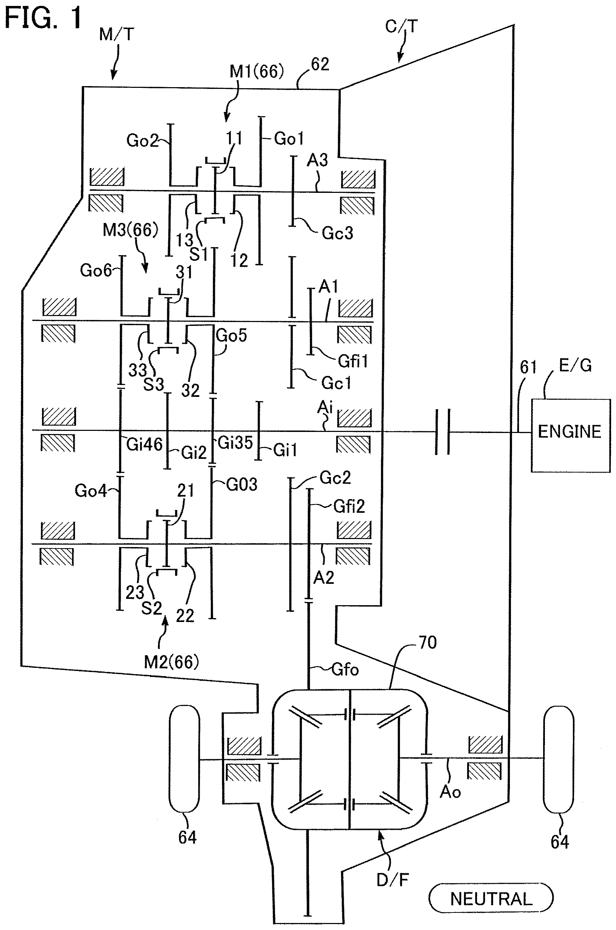

Hereinafter, the manual transmission for a vehicle according to the first embodiment of the invention will be explained with reference to the attached drawings, referring to Fig. 1, Fig. 2A through 7A and Fig. 2B through 7B. The M/T according to the first embodiment includes six forward drive speed change stages (first through sixth speed) and is applicable particularly to the FF-vehicle wherein the output shaft 61 of the engine E/G is arranged in a transverse width direction relative to the vehicle. It is noted that the explanation for the reverse will be omitted in this description.

(Structure of First Embodiment)

As indicated in Fig. 1, the M/T according to the first embodiment of the invention includes five shafts, i.e., an input shaft Ai, a first intermediate shaft A1, a second intermediate shaft A2, a third intermediate shaft A3 and an output shaft Ao. These shafts are rotatably supported on a housing 62 through a plurality of bearings (or bushes) which is fixed to the housing 62 and are mutually eccentrically positioned to be in parallel with one another. The input shaft Ai is connected to an output shaft 61 of an engine E/G through a clutch C/T. The output shaft Ao is connected to drive wheels 64 (front two wheels) via a connecting mechanism (not shown). The manual transmission M/T for vehicle is arranged in a vicinity of the engine E/G via the clutch C/T such that the shafts of the manual transmission M/T are positioned in a width direction of the vehicle.

On the input shaft Ai, as the drive gears for establishing forward speed change stages, a first speed drive gear Gi1, a first common drive gear Gi35 which is commonly used as a third speed drive gear and a fifth speed drive gear, a second speed drive gear Gi2 and a second common drive gear Gi46 which is commonly used as a fourth speed drive gear and a sixth speed drive gear are coaxially provided in order from a side close to the engine E/G (clutch C/T). The first speed drive gear Gi1, the first common drive gear Gi35, the second speed drive gear Gi2 and the second common drive gear Gi46 are the drive fixed gears fixed to the input shaft Ai.

On the first intermediate shaft A1, as the driven gears for establishing forward speed change stages, a fifth speed driven gear Go5 and a sixth speed driven gear Go6 are coaxially provided in order from a side close to the engine E/G. The fifth speed driven gear Go5 and the sixth speed driven gear Go6 are provided on the first intermediate shaft A1, allowing a rotation relative to the first intermediate shaft A1 and are the driven idler gears fixed on the first intermediate shaft A1 for engageable therewith or disengageable therefrom. These driven idler gears are the idler gear defined in this invention. The fifth speed driven gear Go5 and the sixth speed driven gear Go6 are always engaging with the first common drive gear Gi35 and the second common drive gear Gi46, respectively. The fifth speed and the sixth speed correspond to the "speed change stage of the first group" of the invention.

On the first intermediate shaftA1, a first final drive gear Gfi1 and a first connecting gear Gc1 are provided coaxially in a position closer to the engine E/G than the position of the fifth speed driven gear Go5, in order from a side close to the engine E/G. The first final drive gear Gfi1 is a fixed gear fixed on the first intermediate shaft A1 and the first connecting gear Gc1 is rotatably supported on the first intermediate shaft A1.

On the second intermediate shaft A2, as the driven gears for establishing forward speed change stages, a third speed driven gear Go3 and a fourth speed driven gear Go4 are coaxially provided in order from a side close to the engine E/G. The third speed driven gear Go3 and the fourth speed driven gear Go4 are the driven idler gears and are the idler gears defined in this invention. The third speed driven gear Go3 and the fourth speed driven gear Go4 are always engaging with the first common drive gear Gi35 and the second common drive gear Gi46, respectively. The third speed and the fourth speed correspond to the "speed change stage of the second group" of the invention.

On the second intermediate shaft A2, a second final drive gear Gfi2 and a second connecting gear Gc2 are provided coaxially in a position closer to the engine E/G than the position of the third speed driven gear Go3, in order from a side close to the engine E/G. The second final drive gear Gfi2 is a fixed gear fixed on the second intermediate shaft A2 and the second connecting gear Gc2 also is a fixed gear fixed on the second intermediate shaft A2. The second connecting gear Gc2 is always engaging with the first connecting gear Gc1.

On the third intermediate shaft A3, as the driven gears for establishing forward speed change stages, a first speed driven gear Go1 and a second speed driven gear Go2 are coaxially provided in order from a side close to the engine E/G. The first speed driven gear Go1 and the second speed driven gear Go2 are the driven idler gears and are the idler gears defined in this invention. The first speed driven gear Go1 and a second speed driven gear Go2 are always engaging with the first drive gear Gi1 and the second drive gear Gi2, respectively. The first speed and the second speed correspond to the "speed change stage of the third group" of the invention.

On the third intermediate shaft A3, a third connecting gear Gc3 is provided coaxially in a position closer to the engine E/G than the position of the first speed driven gear Go1. The third connecting gear Gc3 is a fixed gear fixed on the third intermediate shaft A3. The third connecting gear Gc3 is always engaging with the first connecting gear Gc1.

On the output shaftAo, a final driven gear Gfo which is formed as a unit with the housing 70 of a differential gear mechanism D/F having a well-known structure is coaxially provided. In other words, the final driven gear Gfo is a fixed gear. The final driven gear Gfo is always engaging with the first final drive gear Gfi1 and the second final drive gear Gfi2, respectively.

Further, as shown in Fig. 1, the manual transmission M/T for vehicle includes a first shifting mechanism M1, a second shifting mechanism M2 and a third shifting mechanism M3. The shifting of the speed change stage of the manual transmission M/T is achieved by the operation of the first shifting mechanism M1, the second shifting mechanism M2 and the third shifting mechanism M3. The first shifting mechanism M1, the second shifting mechanism M2 and the third shifting mechanism M3 are operated in response to a shift lever (not shown) via a plurality of link mechanisms (not shown) which connects the shift lever with the first shifting mechanism M1, the second shifting mechanism M2 and the third shifting mechanism M3.

The first shifting mechanism M1 is provided on the third intermediate shaft A3 between the first speed driven gear Go1 and the second speed driven gear Go2. The first shifting mechanism M1 includes a first connecting piece 11 which is provided coaxially with the third intermediate shaft A3 and rotates therewith as a unit, a second connecting piece 12 which is provided coaxially with the first speed driven gear Go1 and rotates therewith as a unit, a third connecting piece 13 which is provided coaxially with the second speed driven gear Go2 and rotates therewith as a unit and a sleeve S1 which is movably provided in an axial direction with respect to the third intermediate shaft A3. The sleeve S1 is operated in response to the operation of the shift lever via the link mechanisms explained above.

The sleeve S1 is inserted into the first connecting piece 11, the second connecting piece 12 and the third connecting piece 13 and in spline connection therewith. When the sleeve S1 is in a non-connected state (position shown in Fig. 1) that is a state in a splined connection with only the first connecting piece 11, the first speed driven gear Go1 and the second speed driven gear Go2 are both rotatable relative to the third intermediate shaft A3.

When the sleeve S1 is in a first speed state (the position of the sleeve S1 in Fig. 1 being moved to the right in Fig. 1) that is a state in a splined connection with the first connecting piece 11 and the second connecting piece 12, the second speed driven gear Go2 is rotatable relative to the third intermediate shaft A3, but the first speed driven gear Go1 is prohibited from relative rotation with the third intermediate shaft A3. In other words, the first shifting mechanism M1 functions to fix the first speed driven gear Go1 to the third intermediate shaft A3 on which the first speed driven gear Go1 is provided.

Further, when the sleeve S1 is in a second speed state (the position of the sleeve S1 in Fig. 1 being moved to the left in Fig. 1) that is a state in a splined connection with the first connecting piece 11 and the third connecting piece 13, the first speed driven gear Go1 is rotatable relative to the third intermediate shaft A3, but the second speed driven gear Go2 is prohibited from relative rotation with the third intermediate shaft A3.

As explained above, the first shifting mechanism M1 selects one of the non-connected state, the first speed state and the second speed state according to the position of the sleeve S1 which is operated by the shift lever. It is noted ere that the structures of the second and the third shifting mechanisms M2 and M3 are similar to the structure of the first shifting mechanism M1 and the detail explanation thereof will be omitted.

The second shifting mechanism M2 is provided on the second intermediate shaft A2 between the third speed driven gear Go3 and the fourth speed driven gear Go4. The second shifting mechanism M2 selects one of the non-connected state, the third speed state and the fourth speed state according to the position of the sleeve S2 which is operated by the shift lever.

The third shifting mechanism M3 is provided on the first intermediate shaft A1 between the fifth speed driven gear Go5 and the sixth speed driven gear Go6. The third shifting mechanism M3 selects one of the non-connected state, the fifth speed state and the sixth speed state according to the position of the sleeve S3 which is operated by the shift lever. As explained, the speed change stage shifting device 66 is formed by the first shifting mechanism M1, the second shifting mechanism M2 and the third shifting mechanism M3. The speed change stage shifting device 66 fixes an idler gear corresponding to a selected one speed change stage selected among the plurality of speed change stages (first speed, second speed, third speed, fourth speed, fifth speed and sixth speed) to a shaft on which the idler gear is provided, to be engageable with or disengageable from the shaft.

(Operation of First Embodiment)

The operation of the manual transmission M/T as structured above will be explained hereinafter. The explanation will be made for each speed change stage of the manual transmission M/T for a vehicle.

<First Speed>

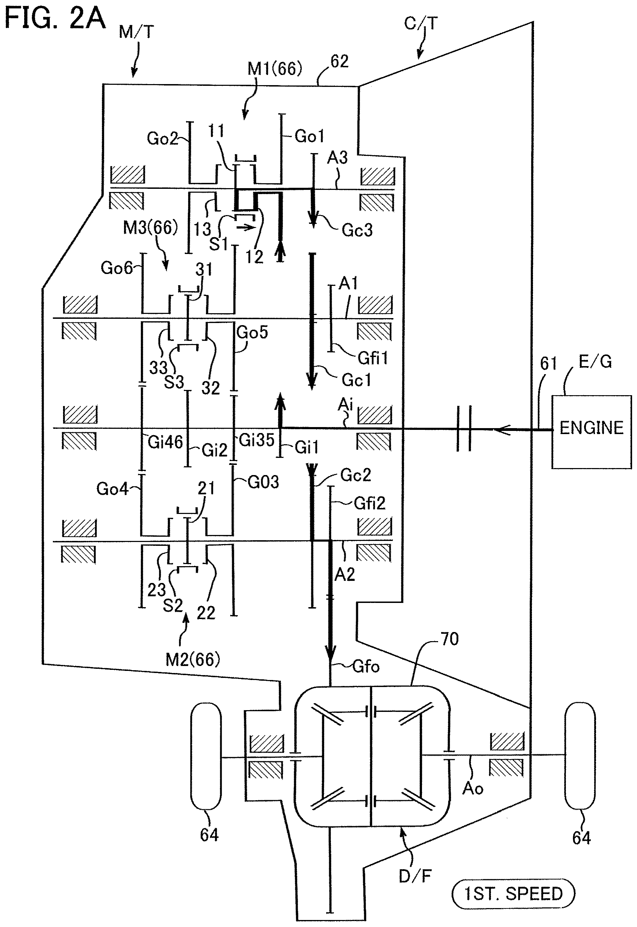

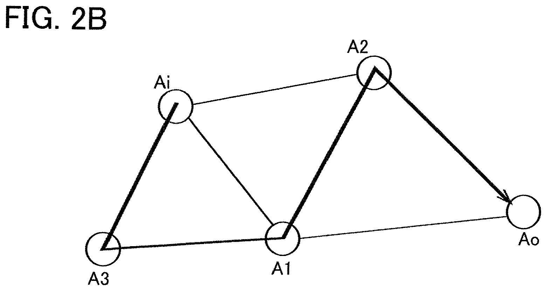

When the shift lever is operated to the position corresponding to the first speed, as shown in Fig. 2A, the sleeve S1 is shifted to the "first speed state" and the other sleeves S2 and S3 are shifted to the "non-connected state". Thus, as indicated with a bold line in Fig. 2A, the power transmitting system is established in the manual transmission M/T for a vehicle in which the power is transmitted from the input shaft Ai to the output shaft Ao via the first speed drive gear Gi1, the first speed driven gear Go1, the second connecting piece 12, the sleeve S1, the first connecting piece 11, the third intermediate shaft A3, the third connecting gear Gc3, the first connecting gear Gc1, the second connecting gear Gc2, the second intermediate shaft A2, the second final drive gear Gfi2 and the final driven gear Gfo. As shown in Fig. 2B, in this power transmitting system, the power is transmitted from the input shaft Ai to the output shaft Ao via the third intermediate shaft A3, the first intermediate shaft A1 and the second intermediate shaft A2 in this order (the power is transmitted through three shafts (= odd number)). As a result, as a forward drive, a reduction ratio of the manual transmission M/T (= an input shaft Ai rotation speed relative to an output shaft Ao rotation speed) is set to the reduction ratio GT1 for the first speed drive.

(Second Speed>

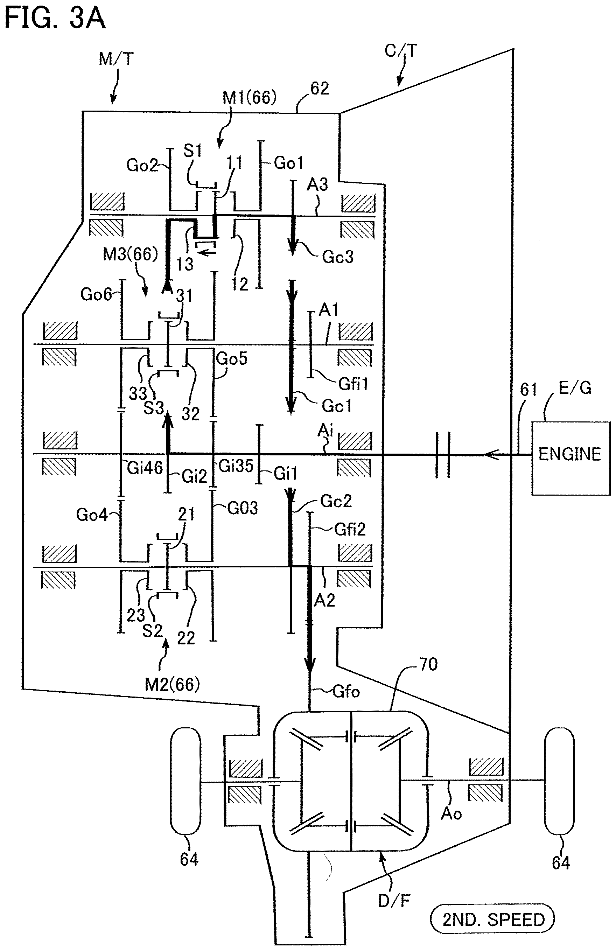

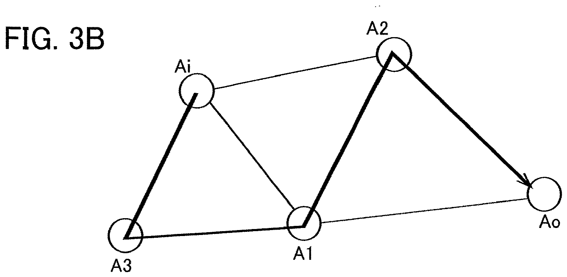

When the shift lever is operated to the position corresponding to the second speed, as shown in Fig. 3A, the sleeve S1 is shifted to the "second speed state" and the other sleeves S2 and S3 are shifted to the "non-connected state". Thus, as indicated with a bold line in Fig. 3A, the power transmitting system is established in the manual transmission M/T for a vehicle in which the power is transmitted from the input shaft Ai to the output shaft Ao via the second speed drive gear Gi2, the second speed driven gear Go2, the third connecting piece 13, the sleeve S1, the first connecting piece 11, the third intermediate shaft A3, the third connecting gear Gc3, the first connecting gear Gc1, the second connecting gear Gc2, the second intermediate shaft A2, the second final drive gear Gfi2 and the final driven gear Gfo. As shown in Fig. 3B, in this power transmitting system, the power is transmitted from the input shaft Ai to the output shaft Ao via the third intermediate shaft A3, the first intermediate shaft A1 and the second intermediate shaft A2 in this order (the power is transmitted through three shafts (= odd number)). As a result, as a forward drive, a reduction ratio of the manual transmission M/T is set to the reduction ratio GT2 for the second speed drive. The relationship between the first and the second speed reduction ratios is established as follows:

First speed reduction ratio GT2 > Second speed reduction ratio GT2.

<Third Speed>

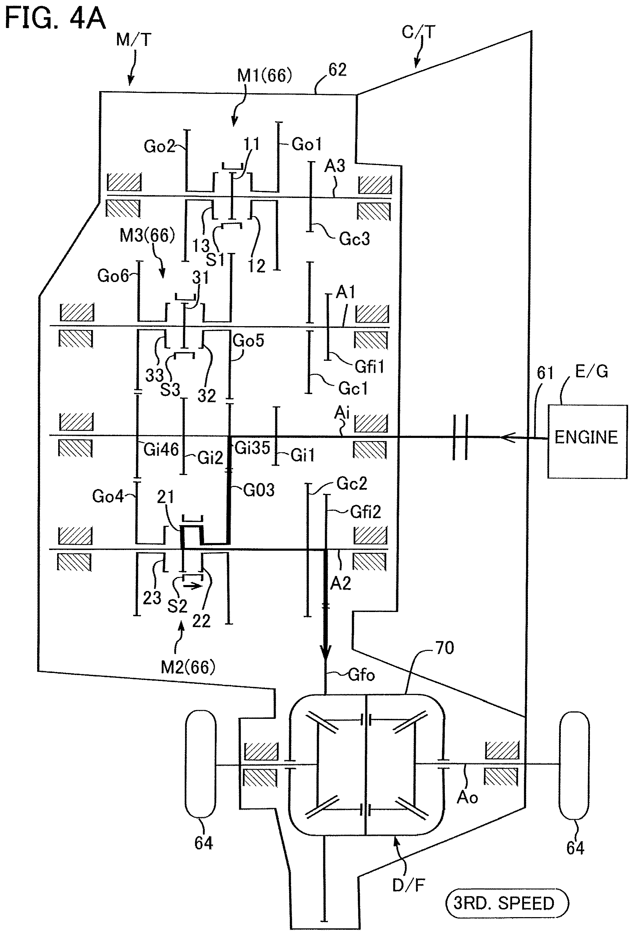

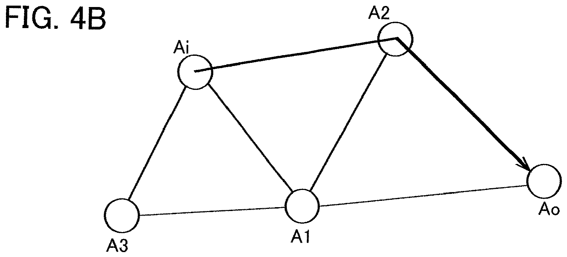

When the shift lever is operated to the position corresponding to the third speed, as shown in Fig. 4A, the sleeve S2 is shifted to the "third speed state" and the other sleeves S1 and S3 are shifted to the "non-connected state". Thus, as indicated with a bold line in Fig. 4A, the power transmitting system is established in the manual transmission M/T for a vehicle in which the power is transmitted from the input shaft Ai to the output shaft Ao via the first common drive gear Gi35, the third speed driven gear Go3, the fifth connecting piece 22, the sleeve S2, the fourth connecting piece 21, the second intermediate shaft A2, the second final gear Gfi2 and the final driven gear Gfo. As shown in Fig. 4B, in this power transmitting system, the power is transmitted from the input shaft Ai to the output shaft Ao via only the second intermediate shaft A2 (the power is transmitted through one shaft (= odd number)). As a result, as a forward drive, a reduction ratio of the manual transmission M/T is set to the reduction ratio GT3 for the third speed drive. The relationship between the second and the third speed reduction ratios is established as follows:

Second speed reduction ratio GT2 > Third speed reduction ratio GT3.

<Fourth Speed>

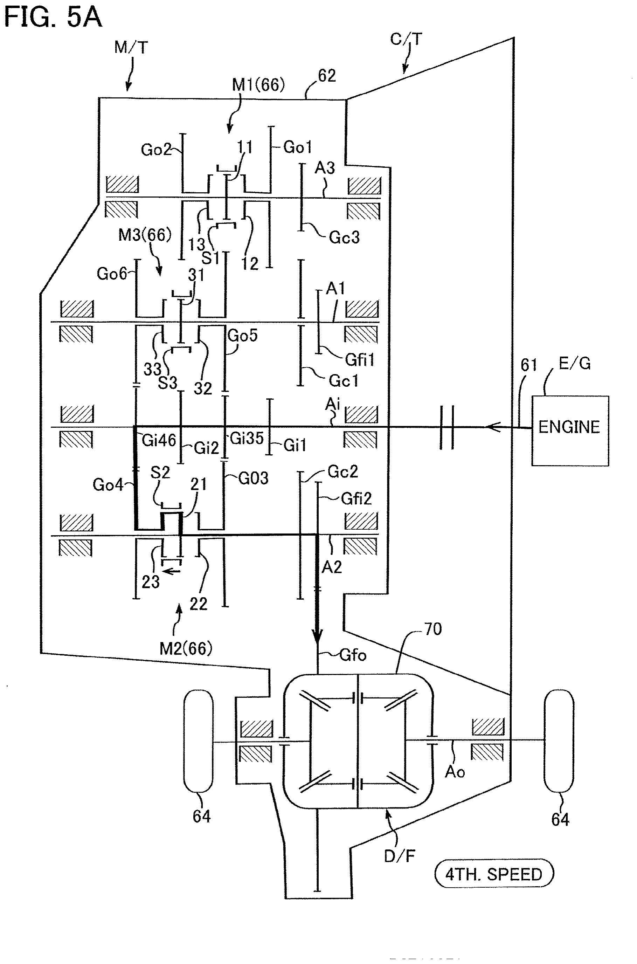

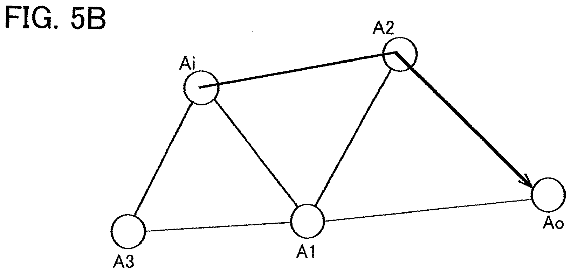

When the shift lever is operated to the position corresponding to the fourth speed, as shown in Fig. 5A, the sleeve S2 is shifted to the "fourth speed state" and the other sleeves S1 and S3 are shifted to the "non-connected state". Thus, as indicated with a bold line in Fig. 5A, the power transmitting system is established in the manual transmission M/T for a vehicle in which the power is transmitted from the input shaft Ai to the output shaft Ao via the second common drive gear Gi46, the fourth speed driven gear Go4, the sixth connecting piece 23, the sleeve S2, the fourth connecting piece 21, the second intermediate shaft A2, the second final gear Gfi2 and the final driven gear Gfo. As shown in Fig.

5B, in this power transmitting system, the power is transmitted from the input shaft Ai to the output shaft Ao via only the second intermediate shaft A2 (the power is transmitted through one shaft (= odd number)). As a result, as a forward drive, a reduction ratio of the manual transmission M/T is set to the reduction ratio GT4 for the fourth speed drive. The relationship between the third and the fourth speed reduction ratios is established as follows:

$$\text{Third speed reduction ratio GT3} > \text{Fourth speed reduction ratio GT4.}$$

<Fifth Speed>

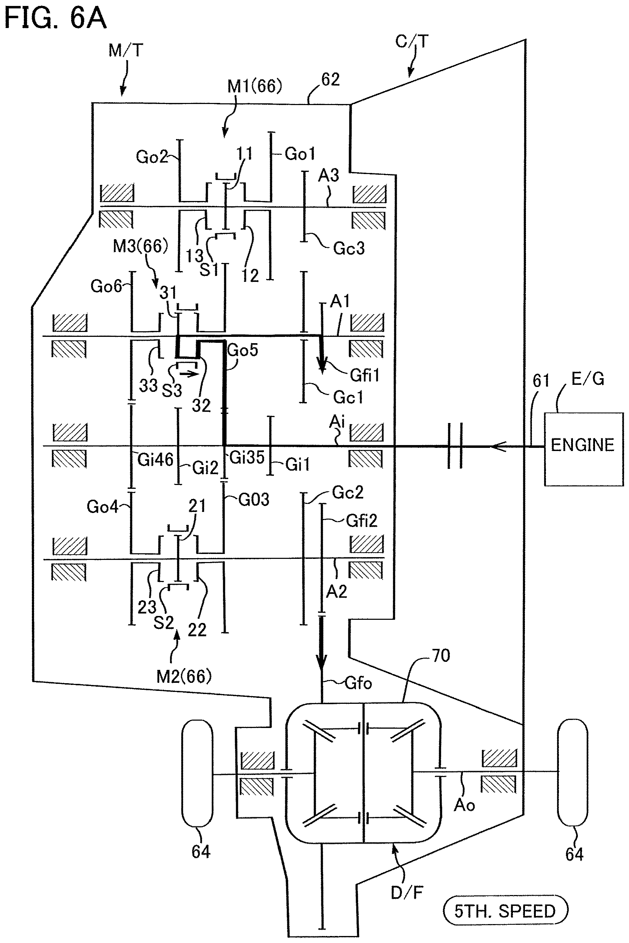

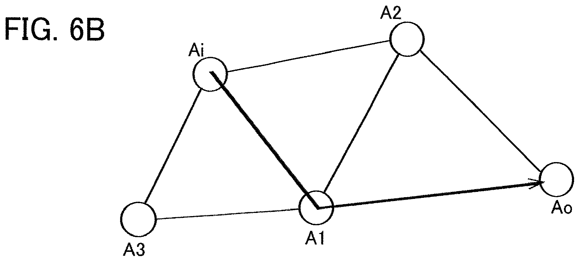

When the shift lever is operated to the position corresponding to the fifth speed, as shown in Fig. 6A, the sleeve S3 is shifted to the "fifth speed state" and the other sleeves S1 and S2 are shifted to the "non-connected state". Thus, as indicated with a bold line in Fig. 6A, the power transmitting system is established in the manual transmission M/T for a vehicle in which the power is transmitted from the input shaft Ai to the output shaft Ao via the first common drive gear Gi35, the fifth speed driven gear Go5, the eighth connecting piece 32, the sleeve S3, the seventh connecting piece 31, the first intermediate shaft A1, the first final gear Gfi1 and the final driven gear Gfo. As shown in Fig. 6B, in this power transmitting system, the power is transmitted from the input shaft Ai to the output shaft Ao via only the first intermediate shaft A1 (the power is transmitted through one shaft (= odd number)). As a result, as a forward drive, a reduction ratio of the manual transmission M/T is set to the reduction ratio GT5 for the fifth speed drive. The relationship between the fourth and the fifth speed reduction ratios is established as follows:

$$\text{Fourth speed reduction ratio GT4} > \text{Fifth speed reduction ratio GT5.}$$

< Sixth Speed>

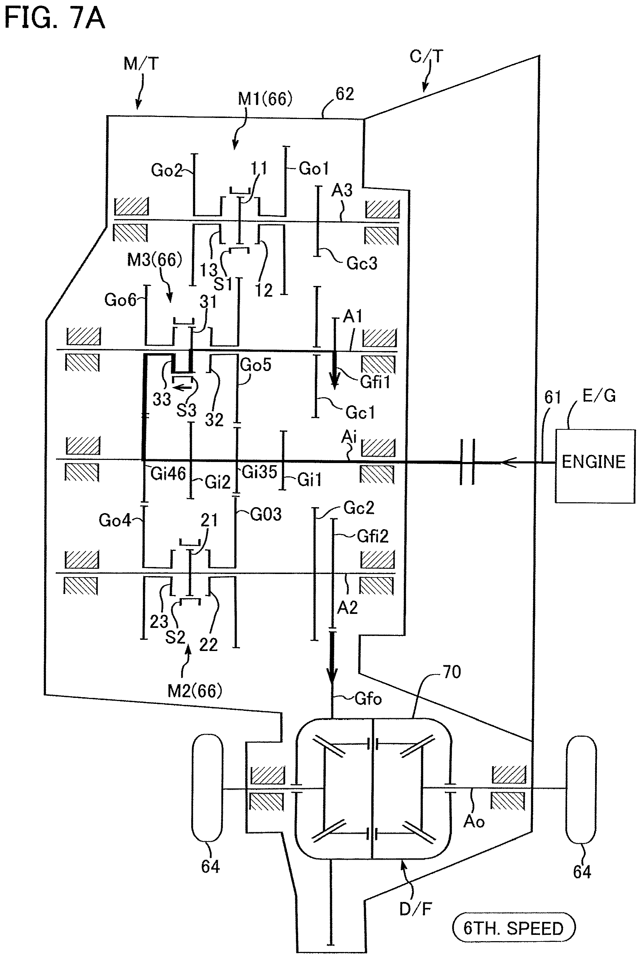

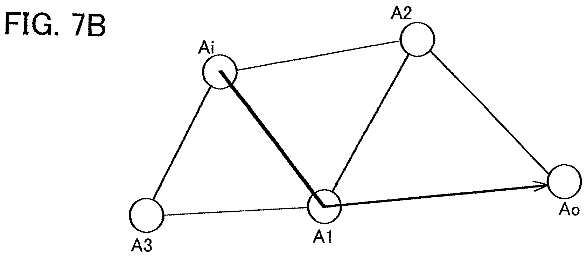

When the shift lever is operated to the position corresponding to the sixth speed, as shown in Fig. 7A, the sleeve S3 is shifted to the "sixth speed state" and the other sleeves S1 and S2 are shifted to the "non-connected state". Thus, as indicated with a bold line in Fig. 7A, the power transmitting system is established in the manual transmission M/T for a vehicle in which the power is transmitted from the input shaft Ai to the output shaft Ao via the second common drive gear Gi46, the sixth speed driven gear Go6, the ninth connecting piece 33, the sleeve S3, the seventh connecting piece 31, the first intermediate shaft A1, the first final gear Gfi1 and the final driven gear Gfo. As shown in Fig. 7B, in this power transmitting system, the power is transmitted from the input shaft Ai to the output shaft Ao via only the first intermediate shaft A1 (the power is transmitted through one shaft (= odd number)). As a result, as a forward drive, a reduction ratio of the manual transmission M/T is set to the reduction ratio GT6 for the sixth speed drive. The relationship between the fourth and the fifth speed reduction ratios is established as follows:

$$\text{Fifth speed reduction ratio GT5} > \text{Sixth speed reduction ratio GT6.}$$

According to the manual transmission M/T of the first embodiment structured above, the six forward speed driven gears Go1, Go2, Go3, Go4, Go5 and Go6 are the idler gears defined in this invention and they are sorted and arranged on the three intermediate shafts, i.e., two idler gears are arranged on each of the three shafts. Accordingly, compared to the M/T described in the Background of the Technology (six driven gears are sorted and arranged on the two intermediate shafts.: See Fig. 16), the maximum number of idler gears sorted to each intermediate shaft can be decreased. In detail, according to the conventional M/T shown in Fig. 16, the two "gear sets" (i.e., four idler gears) are arranged on the second intermediate shaft A2, whereas according to the embodiment, only one "gear set" (i.e., two idler gears) is arranged on each of the first, second and third intermediate shafts A1, A2 and A3, respectively. As a result, compared to the structure of the conventional M/T, the length in an axial direction of the manual transmission M/T can be further shortened.

(Second Embodiment)

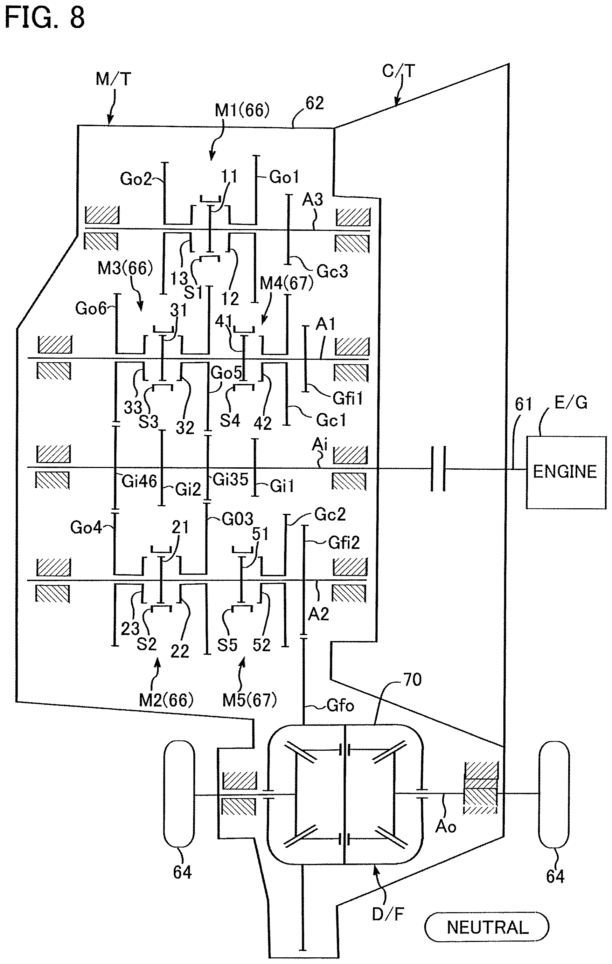

Next, the manual transmission M/T according to the second embodiment of this invention will be explained with reference to Figs. 8, 9A through 15A and 9B through 15B. The M/T according to the second embodiment includes six forward drive speed change stages (first through sixth speed) and one reverse drive speed change stage (reverse) and is applicable particularly to the FF-vehicle wherein the output shaft 61 of the engine E/G is arranged in a transverse width direction relative to the vehicle. It is noted that in this embodiment, the structures shown in Figs. 1, 2A through 7A and 2B through 7B are similar to those of the first embodiment and the explanation thereof will be omitted in this description.

As shown in Fig. 8, the manual transmission M/T for a vehicle further includes the fourth shifting mechanism M4 and the fifth shifting mechanism M5, in addition to the first, second and third shifting mechanisms M1, M2 and M3 shown in fig. 1. The shifting of the speed change stage of the manual transmission M/T is achieved by the operation of the first shifting mechanism M1, the second shifting mechanism M2 and the third shifting mechanism M3, the fourth shifting mechanism M4 and the fifth shifting mechanism M5. The first shifting mechanism M1, the second shifting mechanism M2, the third shifting mechanism M3, the fourth shifting mechanism M4 and the fifth shifting mechanism M5 are operated in response to a shift lever (not shown) via a plurality of link mechanisms (not shown) which connects the shift lever with the first shifting mechanism M1, the second shifting mechanism M2, the third shifting mechanism M3, the fourth shifting mechanism M4 and the fifth shifting mechanism M5.

The fourth shifting mechanism M4 is provided on the first intermediate shaft A1 between the fifth speed driven gear Go5 and the first connecting gear Gc1. The first connecting gear Gc1 is relatively rotatably provided on the first intermediate shaft A1 and is fixed engageably with or disengageably from the first intermediate shaft A1 by the fourth shifting mechanism M4, as shown in Fig. 8. Accordingly, the first connecting gear Gc1 according to the second embodiment corresponds to the idler gear defined by the invention. The fourth shifting mechanism M4 selects one of the non-connected state and a connected state with the first connecting gear Gc1 according to the position of the sleeve S4 which is operated by the shift lever.

The fifth shifting mechanism M5 is provided on the second intermediate shaft A2 between the third speed driven gear Go3 and the second connecting gear Gc2. The second connecting gear Gc2 is relatively rotatably provided on the second intermediate shaft A2 and is fixed engageably with or disengageably from the second intermediate shaft A2 by the fifth shifting mechanism M5, as shown in Fig. 8. Accordingly, the second connecting gear Gc2 according to the second embodiment corresponds to the idler gear defined by the invention. The fifth shifting mechanism M5 selects one of the non-connected state and a connected state with the second connecting gear Gc2 according to the position of the sleeve S5 which is operated by the shift lever. A group shifting device 67 is formed by the fourth shifting mechanism M4 and the fifth shifting mechanism M5. The group shifting device 67 fixes a selected connecting gear selected from the first and the second connecting gears Gc1 and Gc2 to a shaft on which the selected connecting gear is provided, to be engageable with or disengageable from the shaft.

(Operation of Second Embodiment)

The operation of the manual transmission M/T as structured above will be explained hereinafter. The explanation will be made for each speed change stage of the manual transmission M/T for a vehicle.

<First Speed>

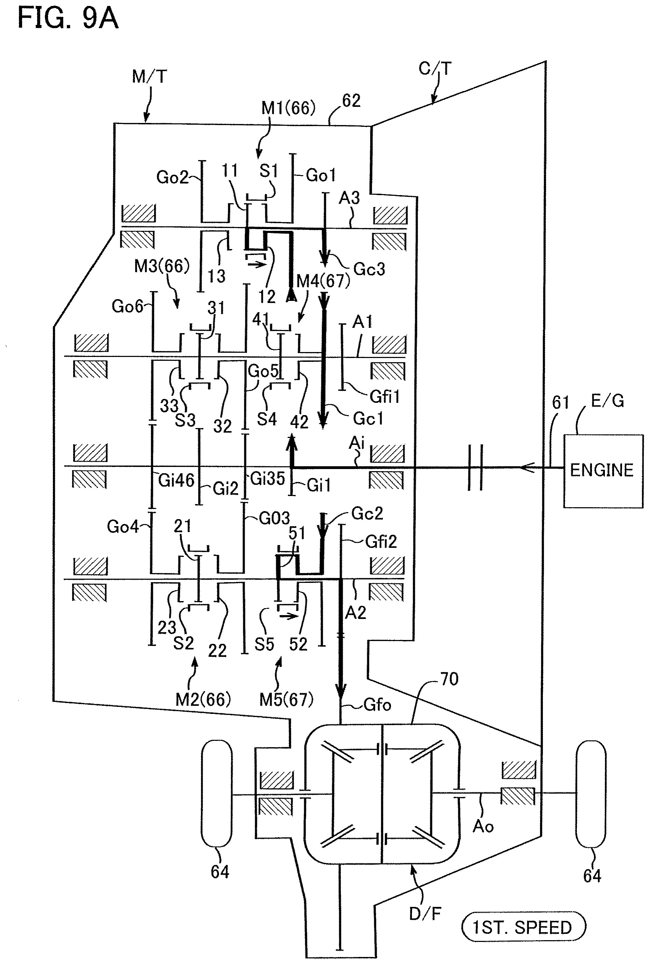

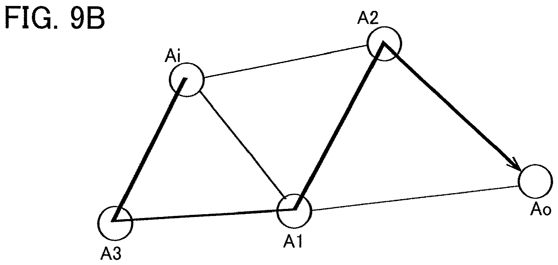

When the shift lever is operated to the position corresponding to the first speed, as shown in Fig. 9A, the sleeve S1 is shifted to the "first speed state" and the sleeve S5 is shifted to the "connected state with the second connecting gear Go2". Thus, as indicated with a bold line in Fig. 9A, the power transmitting system is established in the manual transmission M/T for a vehicle in which the power is transmitted from the input shaft Ai to the output shaft Ao via the first speed drive gear Gi1, the first speed driven gear Go1, the second connecting piece 12, the sleeve S1, the first connecting piece 11, the third intermediate shaft A3, the third connecting gear Gc3, the first connecting gear Gc1, the second connecting gear Gc2, the thirteenth connecting piece 52, the sleeve S5, the twelfth connecting piece 51, the second intermediate shaft A2, the second final drive gear Gfi2 and the final driven gear Gfo. As shown in Fig. 9B, in this power transmitting system, the power is transmitted from the input shaft Ai to the output shaft Ao via the third intermediate shaft A3, the first intermediate shaft A1 and the second intermediate shaft A2 in this order (the power is transmitted through three shafts (= odd number)). As a result, as a forward drive, a reduction ratio of the manual transmission M/T (= an input shaft Ai rotation speed relative to an output shaft Ao rotation speed) is set to the reduction ratio GT1 for the first speed drive.

<Second Speed>

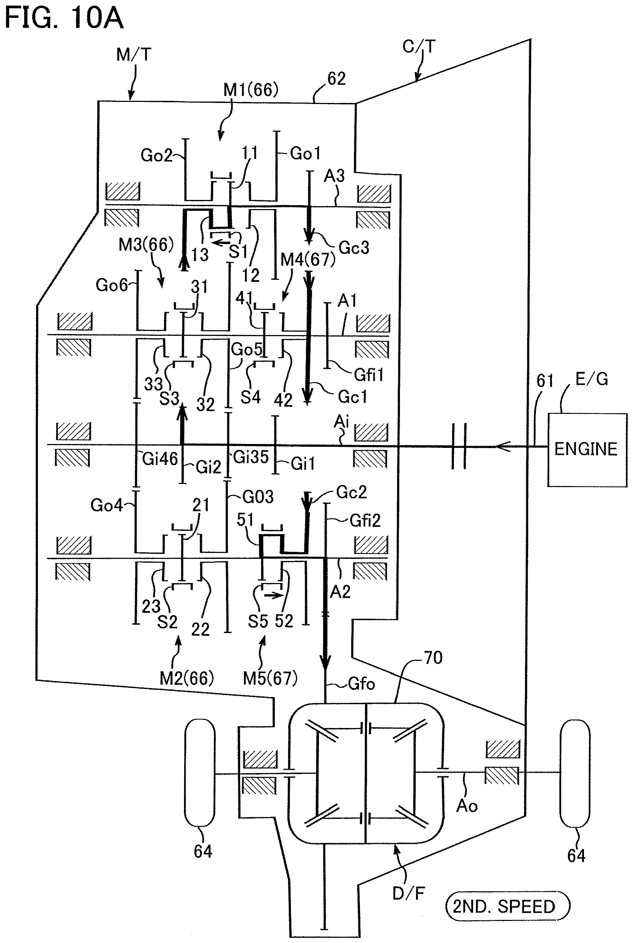

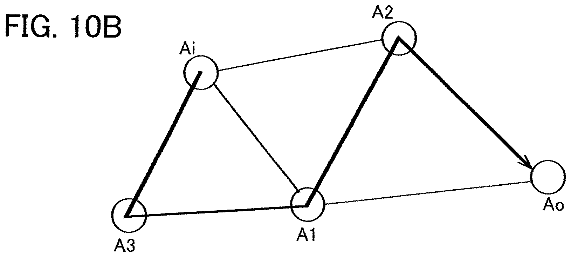

When the shift lever is operated to the position corresponding to the second speed, as shown in Fig. 10A, the sleeve S1 is shifted to the "second speed state" and the sleeve S5 is shifted to a "connected state with the second connecting gear Gc2". The other sleeves S2, S3 and S4 are shifted to the "non-connected state". Thus, as indicated with a bold line in Fig. 10A, the power transmitting system is established in the manual transmission M/T for a vehicle in which the power is transmitted from the input shaft Ai to the output shaft Ao via the second speed drive gear Gi2, the second speed driven gear Go2, the third connecting piece 13, the sleeve S1, the first connecting piece 11, the third intermediate shaft A3, the third connecting gear Gc3, the first connecting gear Gc1, the second connecting gear Gc2, thirteenth connecting piece 52, the sleeve S5, the twelfth connecting piece 51, the second intermediate shaft A2, the second final drive gear Gfi2 and the final driven gear Gfo. As shown in Fig. 10B, in this power transmitting system, the power is transmitted from the input shaft Ai to the output shaft Ao via the third intermediate shaft A3, the first intermediate shaft A1 and the second intermediate shaft A2 in this order (the power is transmitted through three shafts (= odd number)). As a result, as a forward drive, a reduction ratio of the manual transmission M/T is set to the reduction ratio GT2 for the second speed drive. The relationship between the first speed reduction ratio GT1 and the second speed reduction ratio GT2 is established as follows:

First speed reduction ratio GT1 > Second speed reduction ratio GT2

<Third Speed>

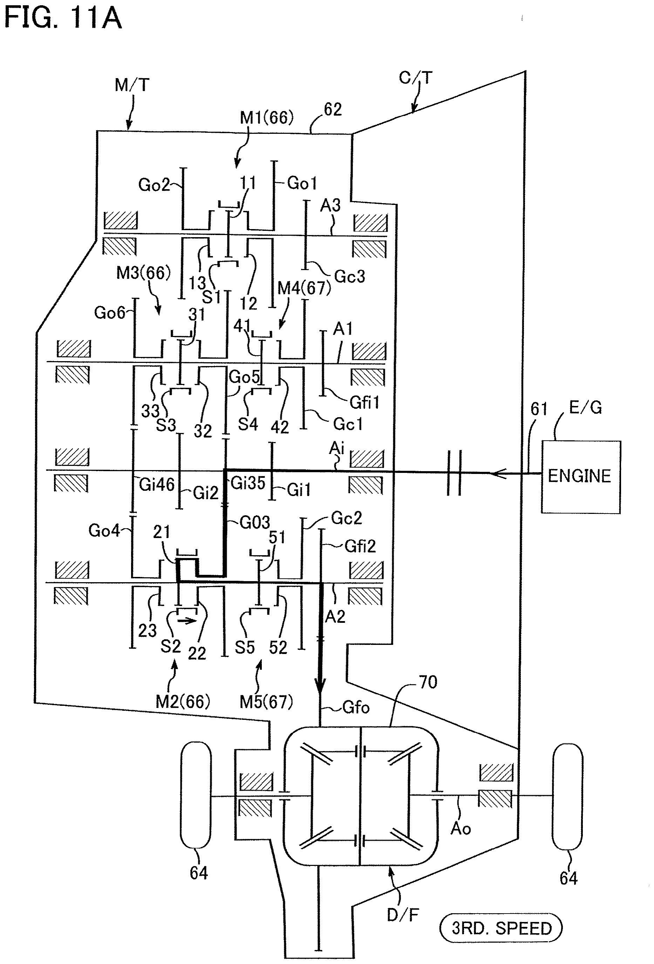

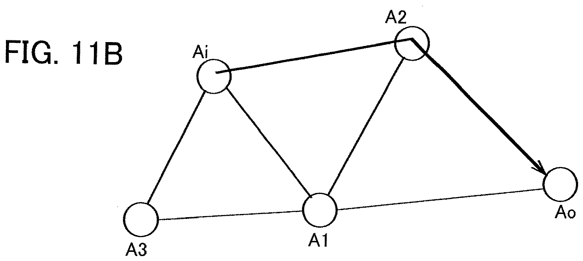

When the shift lever is operated to the position corresponding to the third speed, as shown in Fig. 11A, the sleeve S2 is shifted to the "third speed state" and the other sleeves S1,S3, S4 and S5 are shifted to the "non-connected state". Thus, as indicated with a bold line in Fig. 11A, the power transmitting system is established in the manual transmission M/T for a vehicle in which the power is transmitted from the input shaft Ai to the output shaft Ao via the first common drive gear Gi35, the third speed driven gear Go3, the fifth connecting piece 22, the sleeve S2, the fourth connecting piece 21, the second intermediate shaft A2, the second final gear Gfi2 and the final driven gear Gfo. As shown in Fig. 11B, in this power transmitting system, the power is transmitted from the input shaft Ai to the output shaft Ao via only the second intermediate shaft A2 (the power is transmitted through one shaft (= odd number)). As a result, as a forward drive, a reduction ratio of the manual transmission M/T is set to the reduction ratio GT3 for the third speed drive. The relationship between the second and the third speed reduction ratios is established as follows:

Second speed reduction ratio GT2 > Third speed reduction ratio GT3.

<Fourth Speed>

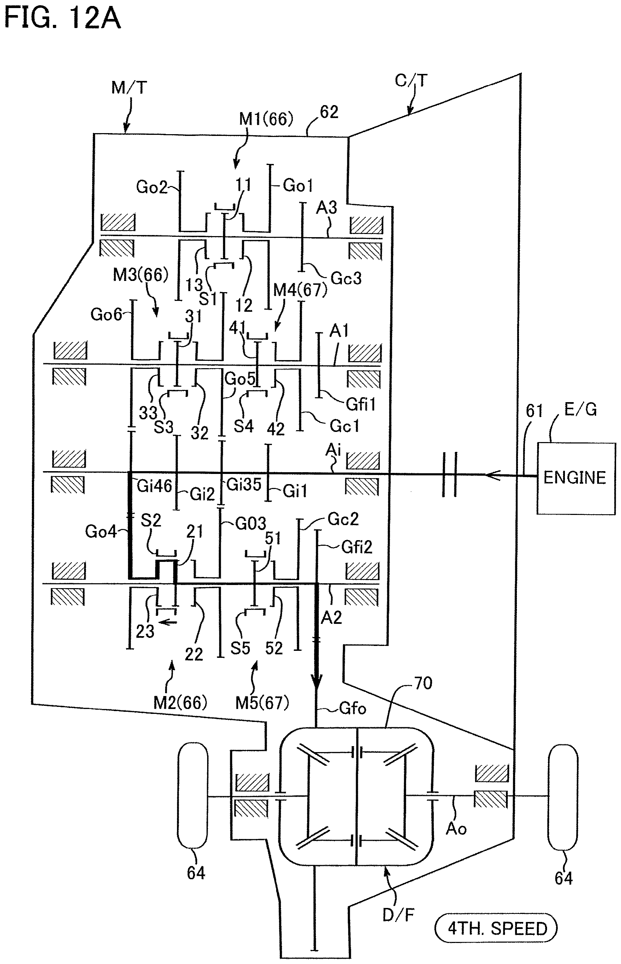

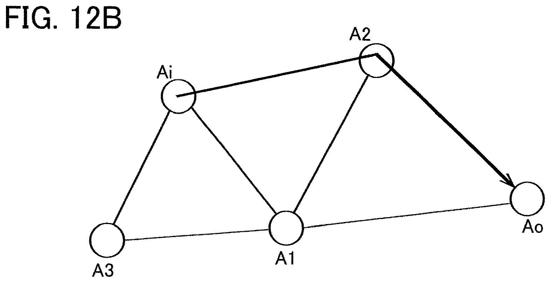

When the shift lever is operated to the position corresponding to the fourth speed, as shown in Fig. 12A, the sleeve S2 is shifted to the "fourth speed state" and the other sleeves S1, S3, S4 and S5 are shifted to the "non-connected state". Thus, as indicated with a bold line in Fig. 12A, the power transmitting system is established in the manual transmission M/T for a vehicle in which the power is transmitted from the input shaft Ai to the output shaft Ao via the second common drive gear Gi46, the fourth speed driven gear Go4, the sixth connecting piece 23, the sleeve S2, the fourth connecting piece 21, the second intermediate shaft A2, the second final gear Gfi2 and the final driven gear Gfo. As shown in Fig. 12B, in this power transmitting system, the power is transmitted from the input shaft Ai to the output shaft Ao via only the second intermediate shaft A2 (the power is transmitted through one shaft (= odd number)). As a result, as a forward drive, a reduction ratio of the manual transmission M/T is set to the reduction ratio GT4 for the fourth speed drive. The relationship between the third and the fourth speed reduction ratios is established as follows: Third speed reduction ratio GT3 > Fourth speed reduction ratio GT4

<Fifth Speed>

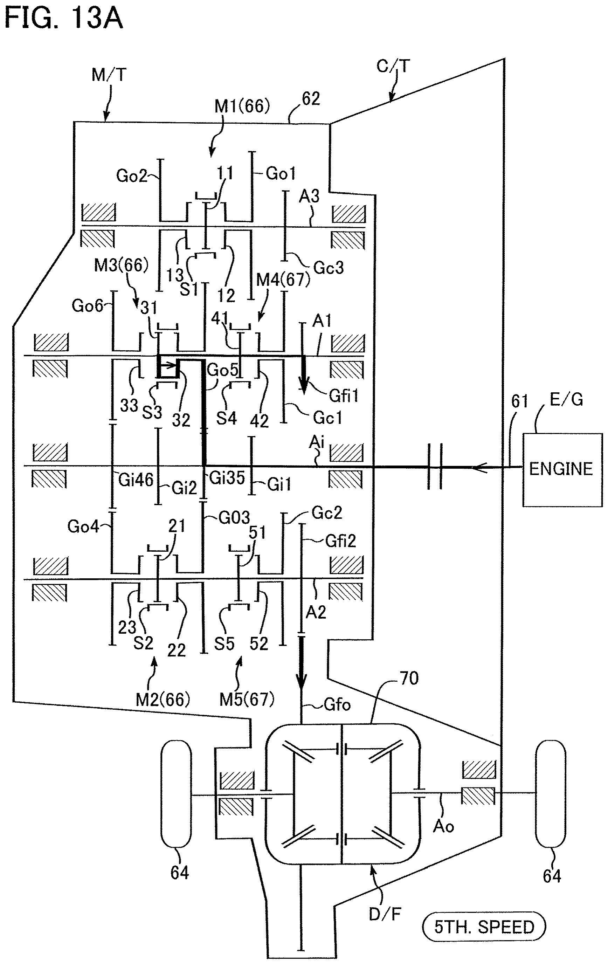

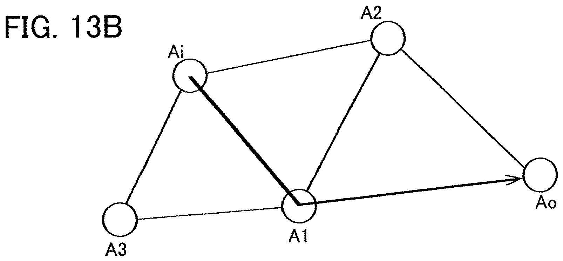

When the shift lever is operated to the position corresponding to the fifth speed, as shown in Fig. 13A, the sleeve S3 is shifted to the "fifth speed state" and the other sleeves S1, S2, S4 and S5 are shifted to the "non-connected state". Thus, as indicated with a bold line in Fig. 13A, the power transmitting system is established in the manual transmission M/T for a vehicle in which the power is transmitted from the input shaft Ai to the output shaft Ao via the first common drive gear Gi35, the fifth speed driven gear Go5, the eighth connecting piece 32, the sleeve S3, the seventh connecting piece 31, the first intermediate shaft A1, the first final gear Gfi1 and the final driven gear Gfo. As shown in Fig. 13B, in this power transmitting system, the power is transmitted from the input shaft Ai to the output shaft Ao via only the first intermediate shaft A1 (the power is transmitted through one shaft (= odd number)). As a result, as a forward drive, a reduction ratio of the manual transmission M/T is set to the reduction ratio GT5 for the fifth speed drive. The relationship between the fourth and the fifth speed reduction ratios is established as follows: Fourth Speed reduction ratio > Fifth speed reduction ratio GT5.

<Sixth Speed>

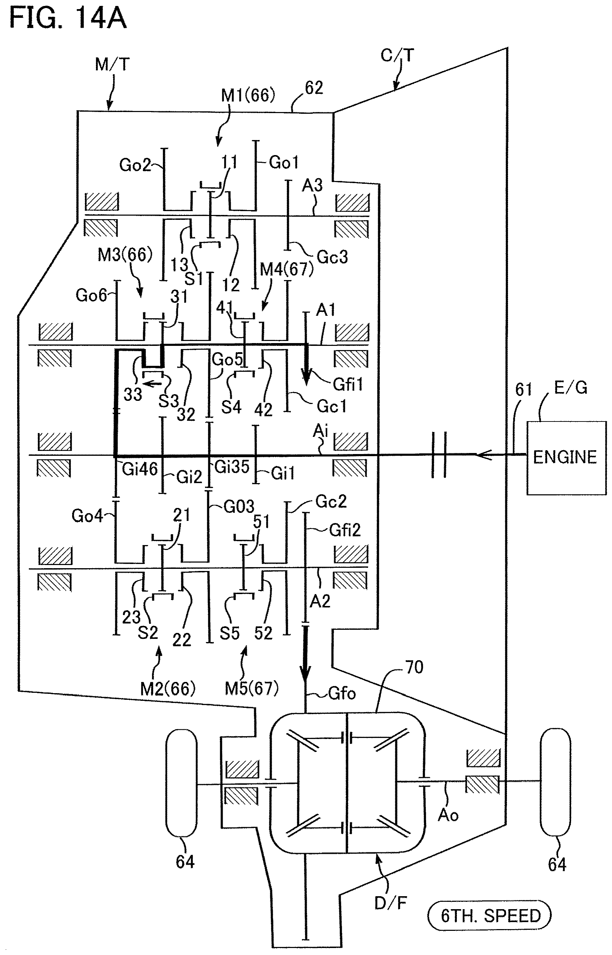

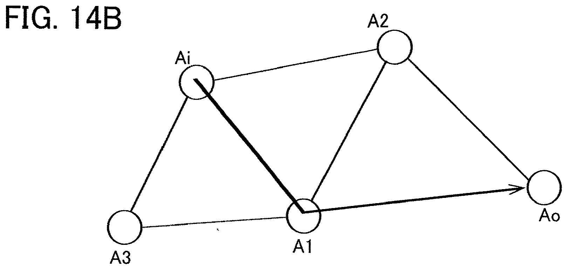

When the shift lever is operated to the position corresponding to the sixth speed, as shown in Fig. 14A, the sleeve S3 is shifted to the "sixth speed state" and the other sleeves S1, S2, S4 and S5 are shifted to the "non-connected state". Thus, as indicated with a bold line in Fig. 14A, the power transmitting system is established in the manual transmission M/T for a vehicle in which the power is transmitted from the input shaft Ai to the output shaft Ao via the second common drive gear Gi46, the sixth speed driven gear Go6, the ninth connecting piece 33, the sleeve S3, the seventh connecting piece 31, the first intermediate shaft A1, the first final gear Gfi1 and the final driven gear Gfo. As shown in Fig. 14B, in this power transmitting system, the power is transmitted from the input shaft Ai to the output shaft Ao via only the first intermediate shaft A1 (the power is transmitted through one shaft (= odd number)). As a result, as a forward drive, a reduction ratio of the manual transmission M/T is set to the reduction ratio GT6 for the sixth speed drive. The relationship between the fourth and the fifth speed reduction ratios is established as follows: Fifth speed reduction ratio GT5 > Sixth speed reduction ratio GT6.

<Reverse>

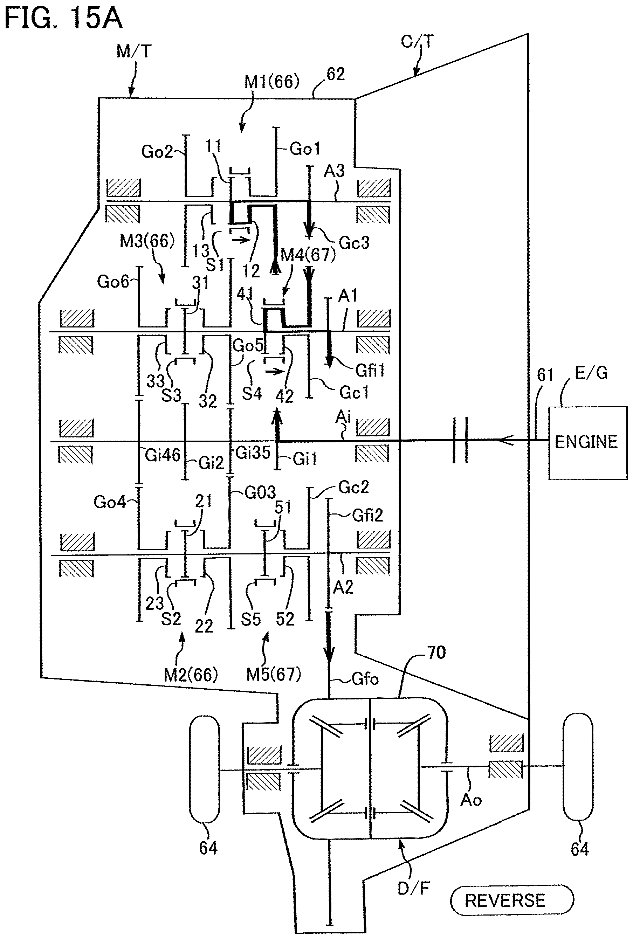

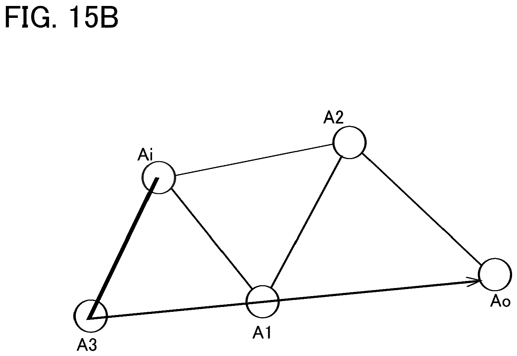

When the shift lever is operated to the position corresponding to the reverse, as shown in Fig. 15A, the sleeve S1 is shifted to the "first speed state" and the sleeve S4 is shifted to the "connected state with the first connecting gear Gc2". The other sleeves S2, S3 and S5 are shifted to the non-connected state. Thus, as indicated with a bold line in Fig. 15A, the power transmitting system is established in the manual transmission M/T for a vehicle in which the power is transmitted from the input shaft Ai to the output shaft Ao via the first speed drive gear Gi1, the first speed driven gear Go1, the second connecting piece 12, the sleeve S1, the first connecting piece 11, the third intermediate shaft A3, the third connecting gear Gc3, the first connecting gear Gc1, the eleventh connecting piece 42, the sleeve S4, the tenth connecting piece 41, the first intermediate shaft A1, the first final gear Gfi1 and the final driven gear Gfo. As shown in Fig. 15B, in this power transmitting system, the power is transmitted from the input shaft Ai to the output shaft Ao via the third intermediate shaft A3 and the first intermediate shaft A1 (the power is transmitted through two shafts (= even number)). As a result, as a reverse drive, a reduction ratio of the manual transmission M/T is set to the reduction ratio GTR for the reverse speed drive.

According to the manual transmission M/T of the second embodiment structured above, the six forward speed driven gears Go1, Go2, Go3, Go4, Go5 and Go6 and the first connecting gear Gc1 and the second connecting gear Gc2 are the idler gears defined in this invention. These eight (8) idler gears are sorted and arranged on the three intermediate shafts A1, A2 and A3. In more detail, three idler gears, i.e., the driven gears Go5 and Go6 and first connecting gear Gc1 are arranged on the first intermediate shaft A1, and other three idler gears, i.e., the driven gears Go3 and Go4 and the second connecting gear Gc2 are arranged on the second intermediate shaft A2. Further, two idler gears, i.e., the driven gears Go1 and Go2 are arranged on the third intermediate shaft A3.

Accordingly, compared to the M/T described in the Background of the Technology (six driven gears are sorted and arranged on the two intermediate shafts.: See Fig. 17), the maximum number of idler gears sorted to each intermediate shaft can be decreased. In detail, according to the conventional M/T shown in Fig. 17, the two "gear sets" (i.e., four idler gears) are arranged on the first intermediate shaft A1, whereas according to the second embodiment, at most one and half "gear set" (i.e., three idler gears) is arranged on each of the first and second intermediate shafts A1 and A2, respectively. As a result, compared to the structure of the conventional M/T, the length in an axial direction of the manual transmission M/T can be further shortened.

According to the second embodiment, as shown in Figs. 9A and 15A, under "the state that the sleeve S1 is set to the first speed state", by changing "the state that the sleeve S5 is set to the connected state with the second connecting gear Gc2" (See Fig. 9A) to "the state that the sleeve S4 is set to the connected state with the first connecting gear Gc1" (See Fig. 15A), the "first speed" is changed to the "reverse". In other words, the reverse drive speed change stage can be established by using one speed gear of the speed change stages (in this example, the "first speed") among the speed change stages of the third group, without providing a gear for reverse drive speed change stage and a shaft (a so-called idle shaft) to be exclusively used for the reverse drive speed change stage.

Further, according to the second embodiment, the speed change stages (first speed and second speed) of the third group are set to lower speed side compared to the speed change stages (fifth speed and sixth speed) of the first group and the speed change stages (third speed and fourth speed) of the second group. In addition, according to the second embodiment, as explained above, one speed change stage (in this example, the "first speed") among the speed change stages of the third group is used also as the reverse drive speed change stage (reverse) and accordingly, the reduction ratio of the reverse drive speed change stage can be set to be more low speed side to thereby secure a large torque necessary for reverse drive operation.

Further, according to the second embodiment, the sleeve S5 is maintained to the non-connected state under one speed change stage among the speed change stages (fifth speed or sixth speed) of the first group and the speed change stages (third or fourth speed) of the second group. In other words, the second connecting gear Gc2 is relatively rotatably supported on the second intermediate shaft A2.

The sleeve S5 may be maintained to the connected state with the second connecting gear Gc2 under one speed change stage among the speed change stages (fifth speed or sixth speed) of the first group and the speed change stages (third or fourth speed) of the second group. In other words, the second connecting gear Gc2 may be fixed to the second intermediate shaft A2, being prohibited from relative rotation with the second intermediate shaft A2. Accordingly, even the sleeve S5 is maintained to the connected state with the second connecting gear Gc2, the sleeve S1 is maintained to the non-connected state and accordingly, no issue of double gear meshing occurs. According to this modified example, compared to the structure of the second embodiment, the number of sleeves which are driven in a case a speed change operation is performed between the "first group and the second group speed change stages" (third, fourth, fifth and sixth speeds) and the third group speed change stages (first and second speeds) can be reduced.

In more detail, according to the second embodiment, the sleeve S5 is maintained to the non-connected state under one speed change stage among the "speed change stages of the first group and the second group" (third, fourth, fifth and sixth speed change stages) and is maintained to the connected state with the second connecting gear Gc2 under one speed change stage among the "speed change stages of the third group" (first and second speed change stages). Therefore, the sleeve S5 has to be driven when a speed change operation is performed between the "first group and the second group speed change stages" (third, fourth, fifth and sixth speeds) and the third group speed change stages (first and second speeds), in addition to the sleeve associated with the speed change stage before speed change operation and the sleeve associated with the speed change stage after speed change operation.

To this structure of the second embodiment, according to this modified example, the sleeve S5 is maintained to the connected state with the second connecting gear Gc2 even under one speed change stage among the "speed change stages of the first group and the second group" (third, fourth, fifth and sixth speed change stages) or under one speed change stage among the "speed change stages of the third group" (first and second speed change stages). Accordingly, only the sleeves which are associated with the speed change stage before and after the speed change operation are driven when a speed change operation is performed between the "first group and the second group speed change stages" (third through sixth speeds) and the third group speed change stages (first and second speeds) and the sleeve S5 is not necessary to be driven.

In the second embodiment, the reverse drive speed change stage can be established by using first speed gear among the speed change stages (first and second speeds) of the third group. However, the second speed gear among the speed change stages of the third group may be used instead. In such case, the sleeve S1 is set to the second speed state and the sleeve S4 is set to the connected state with the first connecting gear Gc1. Other sleeves S2, S3 and S5 are set to be the non-connected state. In this structure, the power transmitting system in the manual transmission M/T for vehicle in which the power is transmitted from the input shaft Ai to the output shaft Ao via the second speed drive gear Gi2, the second speed driven gear Go2, the third connecting piece 13, the sleeve S1, the first connecting piece 11, the third intermediate shaft A3, the third connecting gear Gc3, the first connecting gear Gc1, the eleventh connecting piece 42, the sleeve S4, the tenth connecting piece 41, the first intermediate shaft A1, the first final gear Gfi1 and the final driven gear Gfo.

It is noted here that the invention is not limited to the first embodiment and the second embodiment explained above and various other embodiments or modifications are applicable within the scope of the invention. Although the manual transmission for a vehicle according to the first and the second embodiments has been explained based on the six-speed manual transmission, it is apparent that any modification in which the number of speed change stages may be increased or decreased can be applicable to the invention.

Further, according to the first and the second embodiments, regarding the drive gears and the driven gears which are always engaging with one another, all of the driven gears Go1, Go2, Go3, Go4, Go5 and Go6 are set to be the driven idler gears and all of the drive gears Gi1, Gi2, Gi35 and Gi46 are set to be the drive fixed gears. However, as an alternative example, it is apparently possible that a part of the driven gears Go1, Go2, Go3, Go4, Go5 and Go6, for example, the driven gears Go1 and Go2 are set to be the driven fixed gears and the gears Gi1 and Gi2 which are always engaging with the driven gears Go1 and Go2 are set to be the drive idler gears.

Further, according to the first and the second embodiments explained above, a plurality of speed change stages is allotted to respective first group, second group and third group speed change stages. However, in a part of the speed change stages of the respective first group, second group and third group, a single speed change stage may be allotted.

Further, according to the first and the second embodiments explained above, the final driven gear Gfo which is formed integrally with the housing 70 of the differential gear mechanism D/F is coaxially arranged on the output shaft Ao. However, the final driven gear Gfo per se which is formed separately from the housing 70 of the differential gear mechanism D/F is coaxially arranged directly on the output shaft Ao.

As explained, the manual transmission M/T for a vehicle according to the first and the second embodiments of the present invention is interposed in a power transmitting system which connects the output shaft 61 of the power source E/G of the vehicle with the drive wheels 64 and is provided with a plurality of speed change stages. The manual transmission M/T includes a housing 62, an input shaft Ai rotatably supported on the housing 62 and establishing the power transmitting system with the output shaft 61 of the power source E/G, a plurality of drive gears Gi1, Gi2, Gi35 and Gi46 provided on the input shaft Ai, a first intermediate shaft A1 rotatably supported on the housing 62 at a position non-coaxially apart from the input shaft Ai and being in parallel therewith, at least one driven gear Go5, Go6 provided on the first intermediate shaft A1 for establishing a speed change stage (fifth speed, sixth speed) of a first group which forms a part of the plurality of speed change stages (first speed, second speed, third speed, forth speed, fifth speed and sixth speed), the at least one driven gear Go5, Go6 being always engaging with at least one drive gear Gi35, Gi46 for establishing the speed change stage (fifth speed, sixth speed) of the first group, a first connecting gear Gc1 provided on the first intermediate shaft A1 and being relatively rotatable therewith, a first final drive gear Gfi1 fixed on the first intermediate shaft A1, a second intermediate shaft A2 rotatably supported on the housing 62 at a position non-coaxially apart from the input shaft Ai and being in parallel therewith, at least one driven gear Go3, Go4 provided on the second intermediate shaft A2 for establishing a speed change stage (third speed, fourth speed) of a second group which forms a remaining part of the plurality of speed change stages (first speed, second speed, third speed, forth speed, fifth speed and sixth speed) other than the speed change stage (fifth speed, sixth speed) of the first group, the at least one driven gear Go3, Go4 being always engaging with at least one drive gear Gi35, Gi46 for establishing the speed change stage (third speed, fourth speed) of the second group, a second connecting gear Gc2 provided on the second intermediate shaft A2 and being always engaging with the first connecting gear Gc1, a second final drive gear Gfi2 fixed to the second intermediate shaft A2, a third intermediate shaft A3 rotatably supported on the housing 62 at a position non-coaxially apart from the input shaft Ai and being in parallel therewith, at least one driven gear Go1, Go2 provided on the third intermediate shaft A3 for establishing a speed change stage (first speed, second speed) of a third group which forms all of the part of remaining plurality of speed change stages (first speed, second speed, third speed, forth speed, fifth speed and sixth speed) other than the speed change stage (fifth speed, sixth speed) of the first group and the speed change stage (third speed, fourth speed) of the second group, the at least one driven gear Go1, Go2 always engaging with at least one drive gear Gi1, Gi2 for establishing the speed change stage (first speed, second speed) of the third group, a third connecting gear Gc3 fixed on the third intermediate shaft A3 and being always engaging with the first connecting gear Gc1, an output shaft Ao rotatably supported on the housing 62 at a position non-coaxially apart from the input shaft Ai and being in parallel therewith for establishing the power transmitting system with the drive wheels 64, a final driven gear Gfo fixed on the output shaft Ao and always engaging with the first final drive gear Gfi1 and the second final drive gear Gfi2, respectively, one of the always engaging driven gear Go1, Go2, Go3, Go4, Go5 and Go6 and the drive gear Gi1, Gi2, Gi35 and Gi46 with each other being defined as an idler gear idly rotatably provided on a shaft on which the one of the always engaging driven gear Go1, Go2, Go3, Go4, Go5 and Go6 and the drive gear Gi1, Gi2, Gi35 and Gi46 with each other is provided and the other of the always engaging driven gear Go1, Go2, Go3, Go4, Go5 and Go6 and the drive gear Gi1, Gi2, Gi35 and Gi46 with each other being defined as a fixed gear fixed on a shaft on which the other of the always engaging driven gear Go1, Go2, Go3, Go4, Go5 and Go6 and the drive gear Gi1, Gi2, Gi35 and Gi46 with each other is provided and a speed change stage shifting device 66 which fixes the idler gear corresponding to a selected one speed change stage selected among the plurality of the speed change stages (first speed, second speed, third speed, forth speed, fifth speed and sixth speed) on a shaft on which the idler gear is provided, to be engageable with or disengageable from the shaft.

As explained, the idler gears fixed on the shaft on which the idler gears are provided to be engageable with or disengageable from the shaft are sorted to the three intermediate shafts and further including the input shaft without concentrating to the two intermediate shafts. Accordingly, the axial length of the manual transmission which includes an input shaft, an output shaft and a plurality of intermediate shafts can be shortened.

As explained, the manual transmission M/T for a vehicle according to the second embodiment further includes a group shifting device 67 which fixes a selected one of the first connecting gear Gc1 and the second connecting gear Gc2 on a shaft on which the selected connecting gear is provided, to be engageable with or disengageable from the shaft. In order to establish one speed change stage from the speed change stage (fifth speed, sixth speed) of the first group and the speed change stage (third speed, fourth speed) of the second group, the speed change stage shifting device 66 fixes the idler gear corresponding to the selected one speed change stage on the shaft on which the idler gear is provided and the group shifting device 67 maintains the first connecting gear Gc1 on the first intermediate shaft A1 to allow a relative rotation therewith and at the same time maintains second connecting gear Gc2 on the second intermediate shaft A2 to allow a relative rotation therewith or fixes the second connecting gear Gc2 on the second intermediate shaft A2. In order to establish one speed change stage from the speed change stage (first speed, second speed) of the third group, the speed change stage shifting device 66 fixes the idler gear corresponding to the selected speed change stage on the shaft on which the idler gear is provided and the group shifting device 67 maintains the first connecting gear Gc1 on the first intermediate shaft A1 to allow a relative rotation therewith and at the same time fixes the second connecting gear Gc2 on the second intermediate shaft A2. In order to establish a reverse speed change stage (reverse), the speed change stage shifting device 66 fixes the idler gear Go1 corresponding to the one speed change stage (first speed, second speed) of the third group on the third intermediate shaft A3 on which the idler gear Go1 is provided and the group shifting device 67 fixes the first connecting gear Gc1 on the first intermediate shaft A1 and at the same time maintains the second connecting gear Gc2 on the second intermediate shaft A2 to allow a relative rotation therewith.

Thus, under the state that the speed change stage shifting device 66 fixes the idler gear Go1 corresponding to the one speed change stage from the speed change stages (first speed, second speed) of the third group on the third intermediate shaft A3, the group shifting device 67 fixes the first connecting gear Gc1 on the first intermediate shaft A1 and maintains the second connecting gear Gc2 on the second intermediate shaft A2 to be relatively rotatable thereto. Thus, by using the gear of the one speed change stage from the speed change stages (first speed, second speed) of the third group, the reverse drive speed change stage can be established. Accordingly, there need no exclusive gears for the reverse drive or no exclusive use shaft for the reverse drive (a so-called, idle shaft).

As explained, according to the manual transmission M/T for a vehicle according to the second embodiment, the group shifting device 67 is configured to fix the second connecting gear Gc2 on the second intermediate shaft A2 in one of the speed change stages among the speed change stages (fifth speed, sixth speed) of the first group and the speed change stages (third speed, fourth speed) of the second group. Thus, compared to the case where the second connecting gear Gc2 is maintained on the second intermediate shaft A2, to allow a relative rotation thereto, the group shifting device 67 can maintain the fixed state of the second connecting gear Gc2 on the second intermediate shaft A2, without shifting the fixed state to the relative rotation state to perform the speed change operation between the "speed change stage of the first group and the second group (third speed, fourth speed, fifth speed and sixth speed)" and the "speed change stage of the third group (first speed, second speed)". Therefore, one shifting mechanism needed therefor can be decreased.

As explained, in the manual transmission M/T for a vehicle according to the second embodiment, the speed change stage (first speed, second speed) of the third group is in lower speed side, compared to the speed change stages (fifth speed, sixth speed) of the first group and the speed change stages (third speed, fourth speed) of the second group. Thus, a large torque necessary for reverse drive under a low speed can be assured by shifting the reduction ratio at the reverse drive to the lower speed side.

As explained, the manual transmission M/T according to the first and the second embodiments of the invention is interposed in a power transmitting system which connects the output shaft 61 of the power source E/G of the vehicle with drive wheels 64 and is provided with a plurality of speed change stages. The manual transmission M/T includes a housing 62, an input shaft Ai rotatably supported on the housing 62 and establishing the power transmitting system with the output shaft 61 of the power source E/G, a plurality of drive gears Gi1, Gi2, Gi35 and Gi46 provided on the input shaft Ai, a first intermediate shaft A1 rotatably supported on the housing 62 at a position non-coaxially apart from the input shaft Ai and being in parallel therewith, at least one driven gear Go5, Go6 provided on the first intermediate shaft A1 for establishing a speed change stage (fifth speed, sixth speed) of a first group which forms a part of the plurality of speed change stages (first speed, second speed, third speed, forth speed, fifth speed and sixth speed), the at least one driven gear Go5, Go6 being always engaging with at least one drive gear Gi35, Gi46 for establishing the speed change stage (fifth speed, sixth speed) of the first group, a first connecting gear Gc1 provided on the first intermediate shaft A1 and being relatively rotatable therewith, a first final drive gear Gfi1 fixed on the first intermediate shaft A1, a second intermediate shaft A2 rotatably supported on the housing 62 at a position non-coaxially apart from the input shaft Ai and being in parallel therewith, at least one driven gear Go3, Go4 provided on the second intermediate shaft A2 for establishing a speed change stage (third speed, fourth speed) of a second group which forms a remaining part of the plurality of speed change stages (first speed, second speed, third speed, forth speed, fifth speed and sixth speed) other than the speed change stage (fifth speed, sixth speed) of the first group, the at least one driven gear Go3, Go4 being always engaging with at least one drive gear Gi35, Gi46 for establishing the speed change stage (third speed, fourth speed) of the second group, a second connecting gear Gc2 provided on the second intermediate shaft A2 and being always engaging with the first connecting gear Gc1, a second final drive gear Gfi2 fixed to the second intermediate shaft A2, a third intermediate shaft A3 rotatably supported on the housing 62 at a position non-coaxially apart from the input shaft Ai and being in parallel therewith, at least one driven gear Go1, Go2 provided on the third intermediate shaft A3 for establishing a speed change stage (first speed, second speed) of a third group which forms all of the part of remaining plurality of speed change stages (first speed, second speed, third speed, forth speed, fifth speed and sixth speed) other than the speed change stage (fifth speed, sixth speed) of the first group and the speed change stage (third speed, fourth speed) of the second group, the at least one driven gear Go1, Go2 always engaging with at least one drive gear Gi1, Gi2 for establishing the speed change stage (first speed, second speed) of the third group, a third connecting gear Gc3 fixed on the third intermediate shaft A3 and being always engaging with the first connecting gear Gc1, an output shaft Ao rotatably supported on the housing 62 at a position non-coaxially apart from the input shaft Ai and being in parallel therewith for establishing the power transmitting system with the drive wheels 64, a final driven gear Gfo fixed on the output shaft Ao and always engaging with the first final drive gear Gfi1 and the second final drive gear Gfi2, respectively, at least one driven gear of the speed change stages of the two groups among the speed change stages (fifth speed, sixth speed) of the first group, the speed change stages (third speed, fourth speed) of the second group and the speed change stages (first speed, second speed) of the third group being set to be an driven idler gear idly rotatably provided on two intermediate shafts among the first intermediate shaft A1, the second intermediate shaft A2 and the third intermediate shaft A3 on which at least one driven gear of the speed change stages of the two groups is provided, a drive gear which is always engaging with the driven idler gear being set to be a drive fixed gear fixed on the input shaft Ai, at least one driven gear for the speed change stages of the remaining group among the speed change stages (fifth speed, sixth speed) of the first group, the speed change stages (third speed, fourth speed) of the second group and the speed change stages (first speed, second speed) of the third group being set to be a driven fixed gear fixed on the remaining one of the first intermediate shaft A1, the second intermediate shaft A2 and the third intermediate shaft A3 or a driven idler gear idly rotatably provided on the remaining one of the first intermediate shaft A1, the second intermediate shaft A2 and the third intermediate shaft A3, the drive gear which is always engaging with the driven fixed gear or the driven idler gear being set to a drive idler gear idly rotatably provided on the input shaft Ai or a drive fixed gear fixed on the input shaft Ai, and a speed change shifting device 66 which fixes the idler gear corresponding to the one selected speed change stage selected among the plurality of speed change stages (first speed, second speed, third speed, forth speed, fifth speed and sixth speed) on the shaft on which the idler gear is fixed, to be engageable with or disengageable from the shaft.

Thus, the driven gear of the speed change stage of two groups among the speed change stages (fifth speed, sixth speed) of the first group, the speed change stages (third speed, fourth speed) of the second group and the speed change stages (first speed, second speed) of the third group is set to be the idler gear idly rotatably provided on the two intermediate shafts among the first intermediate shaft A1, the second intermediate shaft A2 and the third intermediate shaft A3 on which at least one driven gear of the speed change stages of the two groups is provided to be engageable with or disengageable from the shaft. The driven gear of the speed change stage of the remaining group among the speed change stages (fifth speed, sixth speed) of the first group, the speed change stages (third speed, fourth speed) of the second group and the speed change stages (first speed, second speed) of the third group is set to be a fixed gear fixed on the remaining intermediate shaft among the first intermediate shaft A1, the second intermediate shaft A2 and the third intermediate shaft A3 or an idler gear fixed on the remaining intermediate shaft to be engageable with or disengageable from the shaft. The drive gear which is always engaging with the fixed gear or the idler gear of the driven gear provided on the remaining intermediate shaft is set to be an idler gear idly rotatably provided on the input shaft Ai and fixed thereon to be engageable therewith or disengageable therefrom or a fixed gear fixed on the input shaft Ai. As explained, the idler gears fixed on the shaft on which the idler gears are provided, to be engageable with or disengageable from the shaft are sorted to the three intermediate shafts and further including the input shaft without concentrating to the two intermediate shafts. Accordingly, the axial length of the manual transmission which includes an input shaft, an output shaft and a plurality of intermediate shafts can be shortened.

[Reference Numerals and Signs]

In the drawings:

61...output shaft, 62...housing, 64...drive wheel, 66...speed change stage shifting device, 67...group shifting device, Ai...input shaft, Ao...output shaft, A1...first intermediate shaft, A2...second intermediate shaft, A3...third intermediate shaft, E/G...power source, Gc1...first connecting gear, Gc2...second connecting gear, Gc3...third connecting gear, Gfi1...first final drive gear, Gfi2...second final drive gear, Gfo...final driven gear, Gi1...drive gear, Gi2...drive gear, Gi35...drive gear, Gi46...drive gear, Go1...driven gear, Go2...driven gear, Go3...driven gear, Go4...driven gear, Go5...driven gear, Go6...driven gear, M/T...manual transmission for vehicle.

**Claims**

**1.** A manual transmission for a vehicle having a plurality of speed change stages and interposed in a power transmitting system which connects an output shaft of a power source of the vehicle and a drive wheel, comprising:

a housing;
an input shaft rotatably supported on the housing and establishing the power transmitting system with the output shaft of the power source;
a plurality of drive gears provided on the input shaft;
a first intermediate shaft rotatably supported on the housing at a position non-coaxially apart from the input shaft and being in parallel with the input shaft;
at least one driven gear provided on the first intermediate shaft for establishing a speed change stage of a first group which forms a part of the plurality of speed change stages, the at least one driven gear being always engaging with at least one drive gear for establishing the speed change stage of the first group;

a first connecting gear provided on the first intermediate shaft and being relatively rotatable therewith;

a first final drive gear fixed on the first intermediate shaft;

a second intermediate shaft rotatably supported on the housing at a position non-coaxially apart from the input shaft and being in parallel with the input shaft;

at least one driven gear provided on the second intermediate shaft for establishing a speed change stage of a second group which forms a part of a remaining plurality of speed change stages other than the speed change stage of the first group, the at least one driven gear being always engaging with at least one drive gear for establishing the speed change stage of the second group;

a second connecting gear provided on the second intermediate shaft and being always engaging with the first connecting gear;

a second final drive gear fixed to the second intermediate shaft;

a third intermediate shaft rotatably supported on the housing at a position non-coaxially apart from the input shaft and being in parallel with the input shaft;

at least one driven gear provided on the third intermediate shaft for establishing a speed change stage of a third group which forms all of the part of remaining plurality of speed change stages other than the speed change stage of the first group and the seed change stage of the second group, the at least one driven gear being always engaging with at least one drive gear for establishing the speed change stage of the third group;

a third connecting gear fixed on the third intermediate shaft and being always engaging with the first connecting gear;

an output shaft rotatably supported on the housing at a position non-coaxially apart from the input shaft and being in parallel with the input shaft for establishing the power transmitting system with the drive wheel;

a final driven gear fixed on the output shaft and always engaging with the first final drive gear and the second final drive gear, respectively;

one of always engaging driven gear and drive gear with each other being defined as an idler gear idly rotatably provided on a shaft on which the one of always engaging driven gear and drive gear with each other is provided and the other of the always engaging driven gear and drive gear with each other being defined as a fixed gear fixed on a shaft on which the other of the always engaging driven gear and drive gear with each other is provided; and

a speed change stage shifting device which fixes the idler gear corresponding to a selected one speed change stage selected among the plurality of the speed change stages on the shaft on which the idler gear is provided, to be engageable therewith or disengageable therefrom.

2. The manual transmission for a vehicle according to claim 1, further comprising:

a group shifting device which fixes a selected one of the first connecting gear and the second connecting gear on a shaft on which the selected connecting gear is provided, to be engageable therewith or disengageable therefrom, wherein

the speed change stage shifting device is configured to fix the idler gear corresponding to the selected one speed change stage on the shaft on which the idler gear is provided and the group shifting device is configured to maintain the first connecting gear on the first intermediate shaft to allow a relative rotation therewith and at the same time to maintain the second connecting gear on the second intermediate shaft to allow a relative rotation therewith or to fix the second connecting gear on the second intermediate shaft, in order to establish one speed change stage from the speed change stage of the first group and the speed change stage of the second group; wherein

the speed change stage shifting device is configured to fix the idler gear corresponding to the selected speed change stage on the shaft on which the idler gear is provided and the group shifting device is configured to maintain the first connecting gear on the first intermediate shaft to allow a relative rotation therewith and at the same time to fix the second connecting gear on the second intermediate shaft, in order to establish one speed change stage from the speed change stage of the third group; and wherein

the speed change stage shifting device is configured to fix the idler gear corresponding to the one speed change stage of the third group on the third intermediate shaft on which the idler gear is provided and the group shifting device is configured to fix the first connecting gear on the first intermediate shaft and at the same time to maintain the second connecting gear on the second intermediate shaft to allow the relative rotation therewith, in order to establish a reverse speed change stage.

3. The manual transmission for a vehicle according to claim 2, wherein

the group shifting device is configured to fix the second connecting gear on the second intermediate shaft under the one speed change stage from the speed change stage of the first group and the speed change stage of the second group.

4. The manual transmission for a vehicle according to claim 2 or 3, wherein
the speed change stage of the third group is set to be a lower side speed change stage, compared with the speed change stages of the first group and the second group.

# FIG. 1

# FIG. 2A

1ST. SPEED

## FIG. 2B

FIG. 3A

M/T    C/T

M1(66)    62

Go2    S1    11    Go1    A3

M3(66)    13    12    Gc3

Go6    31    A1

Go5    Gfi1

33    S3    32    Gc1

Ai

ENGINE    E/G

Gi46    Gi2    Gi35    Gi1    61

Go4    21    G03    Gc2

Gfi2

23    S2    22    A2

M2(66)    70

Gfo

64    Ao    64

D/F

2ND. SPEED

FIG. 3B

A2

Ai

A3

A1

Ao

# FIG. 4A

(3RD. SPEED)

# FIG. 4B

# FIG. 5A

M/T

C/T

M1(66)    62

Go2    11    Go1    A3

Gc3

M3(66)    13    S1    12

Go6    31

Go5    A1

33    Gfi1

S3    32    Gc1

61    E/G

Ai    ENGINE

Gi46    Gi2    Gi35    Gi1

Go4    S2    21    G03    Gc2

Gfi2

23    22    A2

M2(66)    70

Gfo

64    Ao

64

D/F    4TH. SPEED

FIG. 5B

## FIG. 6A

5TH. SPEED

FIG. 6B

## FIG. 7A

6TH. SPEED

## FIG. 7B

# FIG. 8

# FIG. 9A

( 1ST. SPEED )

# FIG. 9B

# FIG. 10A

2ND. SPEED

FIG. 10B

# FIG. 11A

(3RD. SPEED)

FIG. 11B

# FIG. 12A

4TH. SPEED

FIG. 12B

# FIG. 13A

5TH. SPEED

FIG. 13B

# FIG. 14A

6TH. SPEED

FIG. 14B

# FIG. 15A

FIG. 15B

# FIG. 16

RELATED ART

# FIG. 17
## RELATED ART

<table>
<tr><td colspan="2" align="center">**INTERNATIONAL SEARCH REPORT**</td><td>International application No.<br>PCT/JP2016/079692</td></tr>
</table>

**A. CLASSIFICATION OF SUBJECT MATTER**
*F16H3/093*(2006.01)i

According to International Patent Classification (IPC) or to both national classification and IPC

**B. FIELDS SEARCHED**

Minimum documentation searched (classification system followed by classification symbols)
F16H3/093

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-36325 A (Aisin AI Co., Ltd.),<br>19 February 2009 (19.02.2009),<br>paragraphs [0012] to [0022]; fig. 1 to 4<br>& US 2009/0036251 A1<br>paragraphs [0013] to [0023]; fig. 1 to 4<br>& EP 2020533 A2 | 1-4 |
| A | JP 2005-54888 A (Honda Motor Co., Ltd.),<br>03 March 2005 (03.03.2005),<br>paragraphs [0015] to [0045]; fig. 1 to 6<br>(Family: none) | 1-4 |
| A | JP 2009-108915 A (Mazda Motor Corp.),<br>21 May 2009 (21.05.2009),<br>paragraphs [0027] to [0067]; fig. 1 to 2<br>(Family: none) | 1-4 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>06 December 2016 (06.12.16) | Date of mailing of the international search report<br>20 December 2016 (20.12.16) |
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2011043180 A